(19) Europäisches Patentamt
European Patent Office
Office européen des brevets

(11) **EP 4 266 413 B1**

(12) **EUROPEAN PATENT SPECIFICATION**

(45) Date of publication and mention
of the grant of the patent:
**31.12.2025 Bulletin 2026/01**

(21) Application number: **22837910.3**

(22) Date of filing: **04.07.2022**

(51) International Patent Classification (IPC):
$H01M\ 4/36^{(2006.01)}$    $H01M\ 4/48^{(2010.01)}$
$H01M\ 4/38^{(2006.01)}$    $H01M\ 4/62^{(2006.01)}$
$B22F\ 1/16^{(2022.01)}$    $B22F\ 9/12^{(2006.01)}$
$H01M\ 4/587^{(2010.01)}$    $H01M\ 4/04^{(2006.01)}$
$H01M\ 4/1391^{(2010.01)}$    $H01M\ 4/485^{(2010.01)}$
$H01M\ 10/0525^{(2010.01)}$

(52) Cooperative Patent Classification (CPC):
**H01M 4/366; C01B 33/113; H01M 4/0428;
H01M 4/139; H01M 4/364; H01M 4/485;
H01M 4/625;** H01M 10/0525; Y02E 60/10

(86) International application number:
**PCT/KR2022/009595**

(87) International publication number:
**WO 2023/282558 (12.01.2023 Gazette 2023/02)**

(54) **COMPOSITE NEGATIVE ELECTRODE ACTIVE MATERIAL, METHOD FOR PREPARING SAME, NEGATIVE ELECTRODE COMPRISING SAME, AND SECONDARY BATTERY**

ZUSAMMENGESETZTES NEGATIVELEKTRODENAKTIVMATERIAL, VERFAHREN ZUR HERSTELLUNG DAVON, NEGATIVELEKTRODE DAMIT UND SEKUNDÄRBATTERIE

MATÉRIAU ACTIF D'ÉLECTRODE NÉGATIVE COMPOSITE, SON PROCÉDÉ DE PRÉPARATION, ÉLECTRODE NÉGATIVE LE COMPRENANT, ET BATTERIE SECONDAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.07.2021 KR 20210088020**

(43) Date of publication of application:
**25.10.2023 Bulletin 2023/43**

(73) Proprietor: **LG Energy Solution, Ltd.
Seoul 07335 (KR)**

(72) Inventors:
• **OH, Ilgeun**
  **Daejeon 34122 (KR)**
• **PARK, Semi**
  **Daejeon 34122 (KR)**
• **SHIN, Sun Young**
  **Daejeon 34122 (KR)**
• **LEE, Yong Ju**
  **Daejeon 34122 (KR)**
• **KIM, Kwanghyun**
  **Daejeon 34122 (KR)**
• **CHAE, Byung Joon**
  **Daejeon 34122 (KR)**

(74) Representative: **Hoffmann Eitle
Patent- und Rechtsanwälte PartmbB
Arabellastraße 30
81925 München (DE)**

(56) References cited:
EP-A1- 3 236 516    EP-A1- 3 696 893
EP-A1- 3 819 967    EP-A1- 3 907 792
WO-A1-2021/057929    WO-A1-2021/057929
JP-A- 2019 169 354    KR-A- 20170 048 184
KR-A- 20200 023 240    KR-B1- 101 913 054

## Description

[Technical Field]

The present invention relates to a composite negative electrode active material, a preparation method thereof, and a negative electrode and a secondary battery including the same.

[Background Art]

Recently, with the rapid spread of electronic devices using batteries such as mobile phones, notebook-sized computers, and electric vehicles, the demand for small and lightweight secondary batteries having relatively high capacity is rapidly increasing. In particular, lithium secondary batteries are lightweight and have high energy density, and thus have attracted attention as driving power sources for mobile devices. Accordingly, research and development efforts to improve the performance of lithium secondary batteries have been actively conducted.

In general, a lithium secondary battery includes a positive electrode, a negative electrode, a separator interposed between the positive electrode and the negative electrode, an electrolyte, an organic solvent and the like. Further, for the positive electrode and the negative electrode, an active material layer including a positive electrode active material or a negative electrode active material may be formed on a current collector. Lithium-containing metal oxides such as $LiCoO_2$ and $LiMn_2O_4$ are generally used as the positive electrode active material for the positive electrode, and accordingly, lithium-free carbon-based active materials and silicon-based active materials have been used as the negative electrode active material for the negative electrode.

In particular, silicon-based active materials among negative electrode active materials are attracting attention because they have a capacity about 10-fold higher than that of carbon-based active materials, and have an advantage of being capable of achieving high energy density even with thin electrodes due to the high capacity. However, the silicon-based active materials have not been used for general purposes due to the problems of volume expansion caused by charging and discharging, and cracks in and damage to active material particles caused by the volume expansion, and deterioration in service life characteristics due to the cracks and damages.

Therefore, there is a need for developing a secondary battery capable of improving service life characteristics while implementing high capacity and energy density of the silicon-based active materials.

[Patent Document 1]

Korean Patent Application Laid-Open No. 10-2017-0074030 relates to a negative electrode active material for a lithium secondary battery, a method for preparing the same, and a lithium secondary battery including the same, and discloses a negative electrode active material including a porous silicon-carbon composite, but has a limitation in solving the above-described problems.

[Related Art Documents]

[Detailed Description of the Invention]

[Technical Problem]

An object of the present invention is to provide a composite negative electrode active material that minimizes the effects of volume expansion and contraction during charging and discharging in using a silicon-based active material, and has excellent service life performance by preventing damage to the active material.

Further, another object of the present invention is to provide a method for preparing the above-described composite negative electrode active material.

In addition, still another object of the present invention is to provide a negative electrode and a secondary battery including the above-described composite negative electrode active material.

[Technical Solution]

The present invention provides a composite negative electrode active material including: silicon-based oxide particles; and a metal distributed on the surface, inside, or both on the surface and inside of the silicon-based oxide particles, in which the composite negative electrode active material includes one or more aggregates including one or more selected from silicon, oxygen and a metal therein, the metal includes at least one selected from the group consisting of Li, Mg, and Al, and an average value of aggregate diameters obtained by a method including the following Steps (a) to (e) is 65 nm or less.

(a) obtaining a square scanning electron microscope photograph by capturing the composite negative electrode active material under a scanning electron microscope;

(b) selecting two sides different from each other in the scanning electron microscope photograph, selecting one point from each of the two selected sides, and obtaining a straight line connecting the two selected points from the two sides;

(c) obtaining a gray profile graph of the straight line whose longitudinal axis represents a gray value and whose transverse axis represents a straight line distance using a digital image analysis program, and then calculating an average gray value;

(d) obtaining the number of intersections between a reference line parallel to the transverse axis while having the average gray value and the gray profile in the gray profile graph of the straight line, and then defining a value calculated by the following Equation 1 as an aggregate diameter; and

(e) obtaining an average value of the aggregate diameters by performing Steps (a) to (d) 2 or more times;

Aggregate diameter = length of straight line / (number of intersections between reference line and gray profile + 1). [Equation 1]

Further, the present invention provides a method for preparing the above-described composite negative electrode active material, the method including: generating a first vapor by subjecting a silicon-based oxide including a compound represented by the following Chemical Formula 2 to a first heat treatment; generating a second vapor by subjecting a metal including at least one selected from the group consisting of Li, Mg, and Al to a second heat treatment; mixing the first vapor and the second vapor and subjecting the resulting mixture to a gas phase reaction; obtaining a silicon-based oxide-metal composite by cooling after the gas phase reaction, in which the silicon-based oxide includes a compound represented by the following Chemical Formula 2, and a difference between a temperature during the first heat treatment and a temperature during the cooling is 400°C to 550°C; and further comprising pulverizing the silicon-based oxide-metal composite.

[Chemical Formula 2]          $SiO_a(0 < a < 2)$.

In addition, the present invention provides a negative electrode including: a negative electrode current collector; and a negative electrode active material layer disposed on at least one surface of the negative electrode current collector, in which the negative electrode active material layer includes the above-described composite negative electrode active material.

Furthermore, the present invention provides a secondary battery including: the above-described negative electrode; a positive electrode; a separator interposed between the negative electrode and the positive electrode; and an electrolyte.

[Advantageous Effects]

The composite negative electrode active material of the present invention is a composite negative electrode active material including: silicon-based oxide particles; and a metal distributed on the surface, inside, or both on the surface and inside of the silicon-based oxide particles, and is characterized in that an average value of aggregate diameters measured by a specific method is 65 nm or less. The aggregate is present inside the composite negative electrode active material and includes one or more selected from silicon, oxygen and a metal. The composite negative electrode active material of the present invention can dramatically reduce the possibility of damage during charging and discharging and can improve the initial efficiency to an excellent level while minimizing the effect of volume expansion and contraction during charging and discharging of the composite negative electrode active material by adjusting the average value of the aggregate diameters to a small and uniform level within the above-described range. Therefore, the service life performance of a negative electrode and a secondary battery including the above-described composite negative electrode active material can be improved.

[Brief Description of Drawings]

FIG. 1 is a scanning electron microscope (SEM) photograph of the composite negative electrode active material of Example 1.

FIG. 2 is a view for describing a process of calculating the average value of the aggregate diameters of the present invention.

FIG. 3 is a view for describing a process of calculating the average value of the aggregate diameters of the present invention.

FIG. 4 is a view for describing a process of calculating the average value of the aggregate diameters of the present invention.

FIG. 5 is a scanning electron microscope (SEM) photograph of the composite negative electrode active material of Example 2.

FIG. 6 is a scanning electron microscope (SEM) photograph of the composite negative electrode active material of Example 3.

FIG. 7 is a scanning electron microscope (SEM) photograph of the composite negative electrode active material of Example 4.

FIG. 8 is a scanning electron microscope (SEM) photograph of the composite negative electrode active material of Example 5.

FIG. 9 is a scanning electron microscope (SEM) photograph of the composite negative electrode active material of Example 6.

FIG. 10 is a scanning electron microscope (SEM) photograph of the composite negative electrode active material of Example 7.

FIG. 11 is a scanning electron microscope (SEM) photograph of the composite negative electrode active material of Example 8.

FIG. 12 is a scanning electron microscope (SEM) photograph of the composite negative electrode active material of Comparative Example 1.

FIG. 13 is a scanning electron microscope (SEM) photograph of the composite negative electrode active material of Comparative Example 2.

FIG. 14 is a scanning electron microscope (SEM) photograph of the composite negative electrode active material of Comparative Example 3.

FIG. 15 is a scanning electron microscope (SEM) photograph of the composite negative electrode active material of Comparative Example 4.

FIG. 16 is a scanning electron microscope (SEM) photograph of the composite negative electrode active material of Comparative Example 5.

FIG. 17 is a scanning electron microscope (SEM) photograph of the composite negative electrode active material of Comparative Example 6.

[Best Mode]

The terms used in the present specification are used only to describe exemplary embodiments, and are not intended to limit the present invention. Singular expressions include plural expressions unless the context clearly indicates otherwise.

In the present invention, the term "comprise", "include", or "have" is intended to indicate the presence of the characteristic, number, step, constituent element, or any combination thereof implemented, and should be understood to mean that the presence or addition possibility of one or more other characteristics or numbers, steps, constituent elements, or any combination thereof is not precluded.

In the present specification, an average particle diameter ($D_{50}$) may be defined as a particle diameter corresponding to 50% of a cumulative volume in a particle diameter distribution curve of the particles. The average particle diameter ($D_{50}$) may be measured using, for example, a laser diffraction method. The laser diffraction method can generally measure a particle diameter of about several mm from the submicron region, and results with high reproducibility and high resolution may be obtained.

Hereinafter, the present invention will be specifically described.

## <Composite negative electrode active material>

The present invention relates to a composite negative electrode active material. The composite negative electrode active material may be preferably used for a negative electrode for a lithium secondary battery.

The composite negative electrode active material of the present invention includes: silicon-based oxide particles; and a metal distributed on the surface, inside, or both on the surface and inside of the silicon-based oxide particles, in which the composite negative electrode active material includes one or more aggregates including one or more selected from silicon, oxygen and a metal therein, the metal includes at least one selected from the group consisting of Li, Mg, and Al, and an average value of aggregate diameters obtained by a method including the following Steps (a) to (e) is 65 nm or less.

(a) obtaining a square scanning electron microscope photograph by capturing the composite negative electrode active material under a scanning electron microscope;

(b) selecting two sides different from each other in the scanning electron microscope photograph, selecting one point from each of the two selected sides, and obtaining a straight line connecting the two selected points from the two sides;

(c) obtaining an gray profile graph of the straight line whose longitudinal axis represents a gray value and whose transverse axis represents a straight line distance using a digital image analysis program, and then calculating an average gray value;

(d) obtaining the number of intersections between a reference line parallel to the transverse axis while having the average gray value and the gray profile in the gray profile graph of the straight line, and then defining a value calculated by the following Equation 1 as an aggregate diameter; and

(e) obtaining an average value of the aggregate diameters by performing Steps (a) to (d) 2 or more times.

Aggregate diameter = length of straight line / (number of intersections between reference line and gray profile + 1) [Equation 1]

In general, it is known that silicon-based active materials have a capacity about 10-fold higher than that of carbon-based active material, and accordingly, when a silicon-based active material is applied to a negative electrode, it is expected that it is possible to implement a thin film electrode having a high level of energy density even with a small thickness.

However, silicon-based active materials have a problem of service life deterioration due to volume expansion/contraction due to intercalation/deintercalation of lithium according to charging and discharging. In addition, silicon-based active materials have a problem in that due to the presence of irreversible sites in the silicon-based active material, some of the lithium that moves to negative electrode during initial charging causes an irreversible reaction in which the lithium does not return to the positive electrode during discharging.

Although research has been conducted to reduce the irreversible phase of a silicon-based active material and enhance the initial efficiency by doping the silicon-based active material with a metal and reacting the silicon-based active material with the metal in the related art, there is still a limitation in solving the problem of service life deterioration due to volume expansion/contraction of the silicon-based active material.

To solve these problems, the composite negative electrode active material of the present invention is a composite negative electrode active material including: silicon-based oxide particles; and a metal distributed on the surface, inside, or both on the surface and inside of the silicon-based oxide particles, and is characterized in that an average value of aggregate diameters measured by a specific method is 65 nm or less. The aggregate is present inside the composite negative electrode active material and includes one or more selected from silicon, oxygen and a metal. The composite negative electrode active material of the present invention can remarkably reduce the possibility of damage during charging and discharging and can improve the initial efficiency to an excellent level while minimizing the effect of volume expansion and contraction during charging and discharging of the composite negative electrode active material by adjusting the average value of the aggregate diameters to a small and uniform level within the above-described range. Therefore, the service life performance of a negative electrode and a secondary battery including the above-described composite negative electrode active material can be improved.

The composite negative electrode active material of the present invention includes: silicon-based oxide particles; and a metal distributed on the surface, inside, or both on the surface and inside of the silicon-based oxide particles.

The silicon-based oxide particles enable intercalation/deintercalation of lithium, and may function as core particles of a composite negative electrode active material.

The silicon-based oxide particles may include a compound represented by the following Chemical Formula 1.

[Chemical Formula 1]　　　　$SiO_x$

In Chemical Formula 1, x may be 0<x<2.

In Chemical Formula 1, $SiO_2$ (when x = 2 in Chemical Formula 1) does not react with lithium ions, and thus cannot store lithium, so x is preferably within the above range. Specifically, in Chemical Formula 1, x may be 0.5≤x≤1.5 in terms of structural stability of the composite negative electrode active material.

The x corresponds to the number ratio of O to Si included in the $SiO_x$(0<x<2). When the composite negative electrode active material includes $SiO_x$ (0<x<2), the discharge capacity of a secondary battery may be improved.

The average particle diameter ($D_{50}$) of the silicon-based oxide particles may be preferably 1 $\mu$m to 15 $\mu$m, and more preferably 2 $\mu$m to 8 $\mu$m in terms of the fact that the composite negative electrode active material during charging and discharging is ensured to be structurally stable, a problem in that as the particle diameter is excessively increased, volume expansion/contraction level is also increased is prevented, and a problem in that due to the excessively small particle diameter, the initial efficiency is reduced is prevented.

The silicon-based oxide particles may be included in an amount of 75 wt% to 99 wt%, preferably 80 wt% to 97 wt% in the composite negative electrode active material. When the content of the silicon-based oxide particles is within the above range, the metal content may be improved to a suitable level, which is preferred in terms of improving the capacity of the negative electrode.

The silicon-based oxide particles may include Si crystal grains having a crystal grain size of 3 nm to 20 nm, specifically 6 nm to 15 nm, and more specifically 8 nm to 11 nm. In the present invention, "crystal grain" means a single crystal grain unit having a regular atomic arrangement. When Si crystal grains having a crystal grain size within the above range are included, changes in the internal structure of the active material during charging and discharging may be minimized to further improve service life performance.

The Si crystal grain size may be obtained by performing XRD analysis on the silicon-based oxide particles using an X-ray diffraction (XRD) analyzer, obtaining the full width at half maximum and angle ($\theta$) of the (220) plane peak of Si through this, and then substituting the values into Scherrer Equation.

[Scherrer Equation]

$$\text{Si crystal grain size (nm)} = (K \times \lambda) / (FWHM \times Cos\theta)$$

In the Equation, K is a Scherrer constant, $\lambda$ is a wavelength of a light source, FWHM is the full width at half maximum of the (220) plane peak of Si during XRD analysis, and $Cos\theta$ is a cosine value of the angle $\theta$ corresponding to the (220) plane peak of Si.

The metal is distributed on the surface, inside, or both on the surface and inside of the silicon-based oxide particles. The metal may be doped in the silicon-based oxide particles and distributed on the surface and/or inside of the silicon-based oxide particles.

The metal is distributed on the surface and/or inside of the silicon-based oxide particles, and thus may control the volume expansion/contraction of the silicon-based oxide particles to an appropriate level, and may serve to prevent damage to the composite negative electrode active material. Further, the metal may be contained in terms of reducing the proportion of the irreversible phase (for example, $SiO_2$) of the silicon-based oxide particles to increase the efficiency of the composite negative electrode active material.

The metal may include at least one selected from the group consisting of Li, Mg, and Al. Specifically, at least one selected from the group consisting of Li and Mg may be included in terms of the ability to implement the effects of controlling volume expansion of silicon-based oxide particles, preventing damage, improving initial efficiency, and the like at excellent levels.

The metal atom may be present in the form of a metal silicate. The metal silicate may be classified into a crystalline metal silicate and an amorphous metal silicate.

When the metal atom is Li, Li may be present in the form of at least one lithium silicate selected from the group consisting of $Li_2SiO_3$, $Li_4SiO_4$ and $Li_2Si_2O_5$ in the core.

When the metal atom is Mg, Mg may be present in the form of at least one magnesium silicate of $Mg_2SiO_4$ and $MgSiO_3$ in the core.

The metal may be included in the composite negative electrode active material in an amount of 1 wt% to 20 wt% with respect to the sum of the weights of the silicon-based oxide particles and the metal. When the content is in the above range, it is preferred that the damage prevention effect and service life characteristics of the silicon-based oxide particles are more preferably implemented, and simultaneously, the excellent capacity characteristics of the silicon-based oxide particles are not impaired.

Specifically, when the metal includes Mg, the metal may be included in the composite negative electrode active material in an amount of 5 wt% to 15 wt%, more specifically 8 wt% to 13 wt% with respect to the sum of the weights of the silicon-based oxide particles and the metal. When the content is within the above range, the effect of improving capacity characteristics and improving initial efficiency of the composite negative electrode active material may be implemented at an excellent level. In addition, although the metal content is increased in order to improve the initial efficiency of the composite negative electrode active material, the composite negative electrode active material according to the present invention may improve the structural stability of the composite negative electrode active material and prevent deterioration of the service life performance by adjusting the average diameter of aggregates to be described below to be small and uniform.

Meanwhile, when the metal includes Li, the metal may be included in the composite negative electrode active material in an amount of 3 wt% to 12 wt%, more specifically 4 wt% to 8 wt% with respect to the sum of the weights of the silicon-based oxide particles and the metal. When the content is within the above range, the effect of improving capacity characteristics and improving initial efficiency of the composite negative electrode active material may be implemented at an excellent level.

The composite negative electrode active material of the present invention includes one or more aggregates including one or more selected from silicon, oxygen and a metal therein.

The aggregates are obtained by aggregating and bonding silicon and oxygen of the above-described silicon-based oxide particles and the metal, and one or more, specifically two or more may be present inside the composite negative electrode active material.

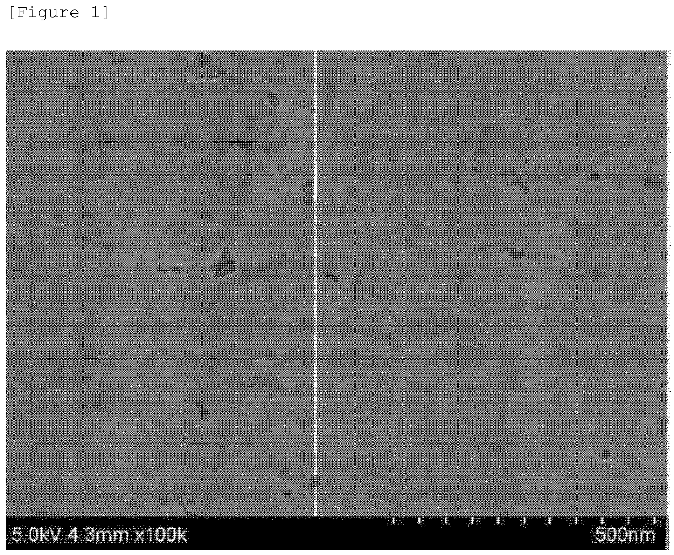

For example, the aggregates may be present in the form of an aggregate being composed of silicon, or in which silicon is present as a main component (first aggregate), or may be present in the form of an aggregate including silicon, oxygen and a metal (second aggregate). Specifically, referring to FIG. 1, which is a scanning electron microscope photograph of an exemplary composite negative electrode active material, it can be confirmed with the naked eye that the aggregates are partitioned within the composite negative electrode active material, and it can be confirmed that there are broadly two types of aggregates. More specifically, in FIG. 1, the first aggregate is relatively dark because the first aggregate is composed of silicon or silicon is included as the main component, and the second aggregate is relatively brighter than the first aggregate due to the presence of oxygen.

In the present specification, the aggregate is defined in a different sense from the Si crystal grain. Specifically, the first aggregate composed of silicon or including silicon as a main component may include both crystalline Si and amorphous Si. Furthermore, the second aggregate may be an aggregate composed of a metal, silicon and oxygen and including a crystalline metal silicate, an amorphous metal silicate, crystalline $SiO_2$, and amorphous $SiO_2$.

The present invention may minimize the effect of volume expansion of silicon and remarkably improve the effects of improving the capacity characteristics and improving the initial efficiency of the composite negative electrode active material by controlling the size of such aggregates to be small and uniform.

In the composite negative electrode active material of the present invention, the average value of aggregate diameters obtained by a method including the following Steps (a) to (e) is 65 nm or less.

(a) obtaining a square scanning electron microscope photograph by capturing the composite negative electrode active material under a scanning electron microscope;
(b) selecting two sides different from each other in the scanning electron microscope photograph, selecting one point from each of the two selected sides, and obtaining a straight line connecting the two selected points from the two sides;
(c) obtaining an gray profile graph of the straight line whose longitudinal axis represents a gray value and whose transverse axis represents a straight line distance using a digital image analysis program, and then calculating an average gray value;
(d) obtaining the number of intersections between a reference line parallel to the transverse axis while having the average gray value and the gray profile in the gray profile graph of the straight line, and then defining a value calculated by the following Equation 1 as an aggregate diameter; and
(e) obtaining an average value of the aggregate diameters by performing Steps (a) to (d) two or more times;

Aggregate diameter = length of straight line / (number of intersections between reference line and gray profile + 1).   [Equation 1]

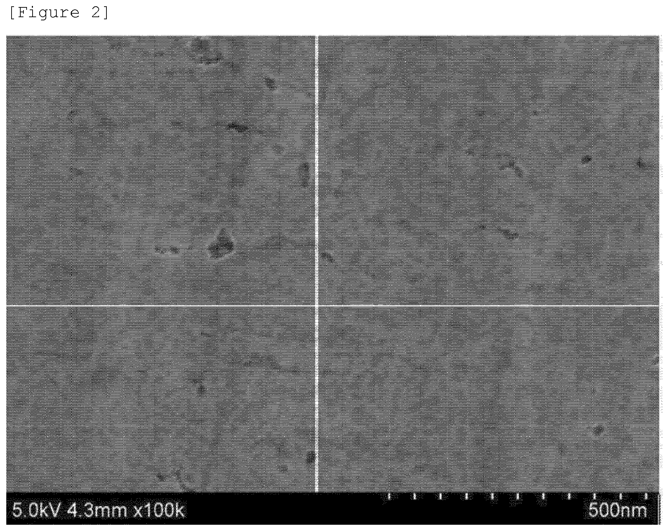

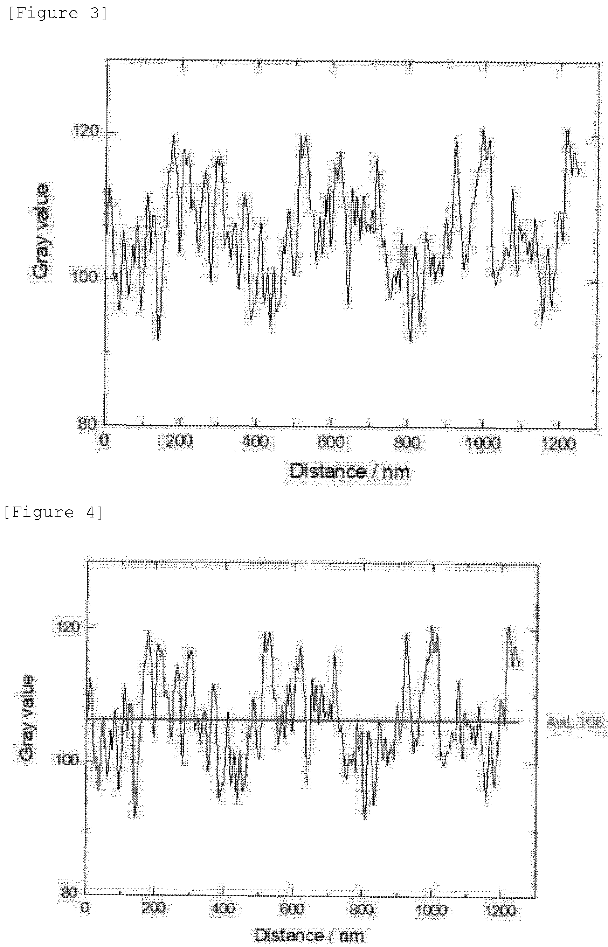

Hereinafter, referring to FIGS. 1 to 4, the method for measuring the diameter of aggregates (Steps (a) to (e)) of the present invention will be described in detail. Specifically, FIG. 1 is a scanning electron microscope photograph of an exemplary composite negative electrode active material (Example 1), FIG. 2 illustrates any straight line in the scanning electron microscope photograph of FIG. 1, FIG. 3 illustrates a gray profile graph of the straight line using a digital image analysis program (Image J), and FIG. 4 is a view for describing a process for obtaining intersections between the average gray value reference line of the gray profile graph and the gray profile graph.

<(a) obtaining a scanning electron microscope photograph of the composite negative electrode active material>

The method for calculating the average value of the aggregate diameters includes (a) obtaining a square scanning electron microscope photograph by capturing the composite negative electrode active material under a scanning electron microscope.

A scanning electron microscope is a type of electron microscope that scans and images the surface of a sample with an electron beam. As illustrated in FIG. 1, two-dimensional image information of the composite negative electrode active material may be obtained by capturing the composite negative electrode active material under a scanning electron microscope.

The scanning electron microscope that can be used for the method for measuring the aggregate diameter or the average value of aggregate diameters is not particularly limited, and may be, for example, S-4800 manufactured by Hitachi, Ltd.

In addition, the magnification of the scanning electron microscope that can be applied to the method for measuring the average diameter of the aggregate is not particularly limited as long as the magnification does not interfere with the sectioning of the aggregate, and the like, and may be, for example, 50,000x to 120,000x, specifically 100,000x.

<(b) drawing a straight line in the scanning electron microscope photograph>

As illustrated in FIG. 2, the method for calculating the average value of the aggregate diameters includes (b) selecting two sides different from each other in the scanning electron microscope photograph, selecting one point from each of the two selected sides, and obtaining a straight line connecting the two selected points from the two sides.

The straight line is plotted to obtain a gray profile graph, and the change in gray of the aggregates can be confirmed through a digital image analysis program according to the straight line.

As illustrated in FIG. 2, a straight line may be obtained by selecting two sides different from each other in a square scanning electron microscope photograph, selecting one point from each of the two sides, and connecting the selected points. For example, two sides selected in the square scanning electron microscope photograph may be in a relationship of sides facing each other.

<(c) obtaining gray profile graph and average gray value>

The method for calculating the average value of the aggregate diameters may include (c) obtaining a gray profile graph of the straight line whose longitudinal axis represents a gray value and whose transverse axis represents a straight line distance using a digital image analysis program, and then calculating an average gray value.

Through the digital image analysis program, a gray profile graph illustrating the degree of contrast of the straight line may be obtained. As illustrated in FIG. 3, in the gray profile graph, the longitudinal axis is the gray value and the transverse axis is the distance of the straight line. The gray value is a relative value indicating the degree of contrast of the straight line, and may not have any unit.

The digital image analysis program is not particularly limited as long as the program can obtain the gray profile of the straight line, and may be, for example, an ImageJ program. Specifically, the gray profile graph in FIG. 3 is illustrated by the ImageJ program.

In an example, by using a digital image analysis program (Image J), it is possible to obtain a gray profile graph of the straight line whose longitudinal axis is a gray value and whose transverse axis is the distance of the straight line by setting a scale of pixel using the scale bar on the previously captured scanning electron microscope photograph, and then performing a plot profile.

The average gray value means the average value of respective gray values according to the distance of a straight line in the gray profile graph.

<(d) calculating aggregate diameters>

The method for calculating the average value of the aggregate diameters includes (d) obtaining the number of intersections between a reference line parallel to the transverse axis while having the average gray value and the gray profile in the gray profile graph of the straight line, and then defining a value calculated by the following Equation 1 as an aggregate diameter.

Aggregate diameter = length of straight line / (number of intersections between reference line and gray profile + 1)     [Equation 1]

As illustrated in FIG. 4, the reference line parallel to the transverse axis while having the average gray value obtained above is plotted on the gray profile graph, and in this case, the number of intersections between the gray profile graph and the reference line may be obtained.

In the present invention, the value calculated according to Equation 1 is defined as an aggregate diameter using the length of the straight line obtained in Step (b) and the number of intersections. By the above method, the size of aggregates present inside the composite negative electrode active material may be predicted.

<(e) calculating average value of aggregate diameters>

The method for calculating the average value of the aggregate diameters may include (e) obtaining an average value of the aggregate diameters by performing Steps (a) to (d) two or more times. The present invention is characterized in that an average value of the aggregate diameters is obtained by performing Steps (a) to (d) two or more times in order to improve the accuracy of aggregate diameter measurement.

Specifically, Steps (a) to (d) may be repeatedly performed 10 times or more, specifically 50 times, and the average value of the aggregate diameters obtained by repeating these steps may be obtained.

The performing of Step (a) two or more times may capture different regions of the composite negative electrode active material or capture the same region of the composite negative electrode active material. When the same region of the composite negative electrode active material is captured, the performing of Steps (a) to (d) two or more times may perform Steps (b) to (d) two or more times. That is, the average value of the aggregate diameters may be measured by obtaining two or more different straight lines from a scanning electron microscope photograph taken from the same composite negative electrode active material region.

The composite negative electrode active material of the present invention may include a region in which an average value of the aggregate diameters obtained by the method including Steps (a) to (e) is 65 nm or less.

The method including Steps (a) to (e) may be performed in an arbitrary region of the composite negative electrode active material. That is, Step (a) obtaining a square scanning electron microscope photograph by capturing the composite negative electrode active material under a scanning electron microscope may be performed in any region of the composite negative electrode active material, and when the average value of the aggregate diameters obtained by performing Steps (a) to (e) based on the arbitrary region satisfies 65 nm or less, the composite negative electrode active material becomes the composite negative electrode active material of the present invention.

When the average value of the aggregate diameters is adjusted to 65 nm or less, it can be evaluated that the aggregate diameter or aggregate size of the composite negative electrode active material of the present invention is adjusted to a small and uniform level, and accordingly, the possibility of damage during charging and discharging can be dramatically reduced and the initial efficiency can be improved to an excellent level while minimizing the effect of volume expansion and contraction during charging and discharging of the composite negative electrode active material.

When the average value of the aggregate diameters exceeds 65 nm, the size of the aggregates is large and inconsistent, so that it is difficult to control volume expansion and contraction of the composite negative electrode active material and the service life performance may remarkably deteriorate.

Specifically, the average value of the aggregate diameters may be 5 nm to 65 nm, more specifically 8 nm to 60 nm. When the average value is within the above range, the effect of volume expansion and contraction during charging and discharging of the composite negative electrode active material may be minimized, and the service life performance of a secondary battery may be further improved.

The standard deviation of the aggregate diameters obtained by Step (e) may be 10 nm or less, specifically 8 nm or less. When the standard deviation is within the above range, the size of the aggregates is uniformly adjusted, so that the effect of volume expansion and contraction during charging and discharging of the composite negative electrode active material may be minimized.

The composite negative electrode active material of the present invention may further include a carbon coating layer located on the surface thereof. The carbon coating layer may function as a protective layer that suppresses the volume expansion of the silicon-based oxide particles and prevents side reactions with an electrolytic solution.

The carbon coating layer may cover at least a portion of the surface of the composite negative electrode active material. That is, the carbon coating layer may be in the form of partially covering the surface of the composite negative electrode active material, or covering the entire surface of the composite negative electrode active material. By the carbon coating layer, conductivity is imparted to the composite negative electrode active material, and the initial efficiency, service life characteristics, and battery capacity characteristics of the secondary battery may be improved.

The carbon coating layer may be included in an amount of 0.1 wt% to 10 wt%, preferably 3 wt% to 7 wt% in the composite negative electrode active material, and the above range is preferred in terms of the ability to prevent side reactions with an electrolytic solution while the carbon coating layer controls the volume expansion of the silicon-based oxide particles to an excellent level.

The carbon coating layer may include at least one of amorphous carbon and crystalline carbon.

The crystalline carbon may further improve the conductivity of the composite negative electrode active material. The crystalline carbon may include at least one selected from the group consisting of fullerene, carbon nanotubes and graphene.

The amorphous carbon may suppress the expansion of the composite negative electrode active material by appropriately maintaining the strength of the carbon coating layer. The amorphous carbon may be a carbide of at least one material selected from the group consisting of tar, pitch and other organic materials, or may be a carbon-based material formed using a hydrocarbon as a source of a chemical vapor deposition method.

The carbon coating layer may be an amorphous carbon coating layer. Specifically, the carbon coating layer may be formed by a chemical vapor deposition (CVD) method using at least one hydrocarbon gas selected from the group consisting of methane, ethane and acetylene.

The carbon coating layer may have a thickness of 1 nm to 500 nm, and specifically 5 nm to 300 nm. When the above range is satisfied, the conductivity of the composite negative electrode active material is improved, so that there is an effect that the initial efficiency and service life of the battery are improved.

The average particle diameter ($D_{50}$) of the composite negative electrode active material may be 1 $\mu$m to 15 $\mu$m, and more preferably 2 $\mu$m to 8 $\mu$m in terms of the fact that the active material during charging and discharging is ensured to be structurally stable, a problem in that as the particle diameter is excessively increased, volume expansion/contraction level is also increased is prevented, and a problem in that due to the excessively small particle diameter, the initial efficiency is reduced is prevented.

**<Preparation method of composite negative electrode active material>**

In addition, the present invention provides a method for preparing a composite negative electrode active material. Specifically, the method for preparing a composite negative electrode active material may be the above-described method for preparing a composite negative electrode active material.

Specifically, the method for preparing a composite negative electrode active material of the present invention includes: generating a first vapor by subjecting a silicon-based oxide including a compound represented by the following Chemical Formula 2 to a first heat treatment; generating a second vapor by subjecting a metal including at least one selected from the group consisting of Li, Mg, and Al to a second heat treatment; mixing the first vapor and the second vapor and subjecting the resulting mixture to a gas phase reaction; obtaining a silicon-based oxide-metal composite by cooling after the gas phase reaction, in which a difference between a temperature during the first heat treatment and a temperature during the cooling is 400°C to 550°C.

[Chemical Formula 2]        $SiO_a (0 < a < 2)$

According to the method for preparing a composite negative electrode active material of the present invention, in a method of obtaining a silicon-based oxide-metal composite by heating a mixture of a silicon-based oxide and a metal to react the mixture in the gas phase, and then cooling the resulting product, it is characterized in that the difference between the heat treatment temperature of the silicon-based oxide and the cooling temperature is adjusted within the above-described range. When the difference between the heat treatment temperature of the silicon-based oxide and the cooling temperature is adjusted within the above-described range, the cooling rate of the silicon-based oxide-metal composite is adjusted to a desired level, so it is possible to prevent a problem in that excessive cooling rate causes the size of the aggregates in the composite negative electrode active material to become excessively large or inconsistent. Therefore, according to the above-described method for preparing a composite negative electrode active material, it is possible to minimize the problem of deterioration in service life performance affecting the composite negative electrode active material due to volume expansion and contraction of silicon.

The method for preparing a composite negative electrode active material according to the present invention includes generating a first vapor by subjecting a silicon-based oxide including a compound represented by the following Chemical Formula 2 to a first heat treatment.

[Chemical Formula 2]        $SiO_a$

In Chemical Formula 2, a may be 0< a < 2. In Chemical Formula 2, $SiO_2$ (when a = 2 in Chemical Formula 2) does not react with lithium ions, and thus cannot store lithium, so a is preferably within the above range.

a may be 0.8 or more and 1.2 or less, or may be 1.

In the method for preparing a composite negative electrode active material of the present invention, it is characterized in that a silicon-based oxide including the compound represented by Chemical Formula 2 is used as a raw material for the first vapor used for preparing a silicon-based oxide-metal composite or a composite negative electrode active material. This is distinguished from using a mixture of silicon (Si) and silicon dioxide ($SiO_2$) as a raw material for the formation of silicon-based oxide vapor in the composite negative electrode active material. Silicon dioxide is known as a material that is evaporated at a temperature of more than about 2,000°C, and is a material whose vaporization temperature is reduced by contact and reaction with silicon. Therefore, when a mixture of silicon and silicon dioxide is used as a raw material for the formation of silicon-based oxide particles, it is difficult to secure the uniformity of the gas phase reaction because the presence and speed of the gas phase reaction may vary depending on the presence or absence of contact between silicon dioxide and silicon. Therefore, according to the method for preparing a composite negative electrode active material of the present invention, by using a silicon-based oxide including the compound represented by Chemical Formula 2 as the raw material for the formation of the first vapor, the uniformity of the gas phase reaction was improved, and in particular, a smooth and uniform reaction may occur even though the difference between the heating temperature and the cooling temperature is adjusted to 400°C to 550°C.

The temperature during the first heat treatment may be 1,300°C to 1,500°C, specifically 1,350°C to 1,450°C, and when the temperature is within the above range, the temperature difference during cooling to be described below may be adjusted to a preferred level while sufficiently generating silicon-based oxide-containing vapor, thereby enabling a desired composite negative electrode active material to be prepared.

The first heat treatment may be performed in a vacuum atmosphere or a reduced pressure atmosphere of -50 torr to -200 torr (reduced pressure of 50 torr to 200 torr).

The method for preparing a composite negative electrode active material of the present invention includes generating a second vapor by subjecting a metal including at least one selected from the group consisting of Li, Mg and Al to a second heat treatment.

The metal may include at least one selected from the group consisting of Li, Mg, and Al, and specifically, may include at least one selected from the group consisting of Li and Mg in terms of the ability to implement the control of volume expansion of silicon-based oxide particles, the prevent of damage, the improvement of the initial efficiency, and the like at excellent levels.

In the method for preparing a composite negative electrode active material of the present invention, the metal included in the second vapor may be included in the mixture in a content of 1 wt% to 20 wt% with respect to the total sum of weights of the silicon-based oxide included in the first vapor and the metal included in the second vapor. When the content is in the above range, it is preferred in terms of the fact that the damage prevention effect and service life characteristics of the silicon-based oxide particles are more preferably implemented, and simultaneously, the excellent capacity characteristics of the silicon-based oxide particles are not impaired. The metal content of the composite negative electrode active material may be measured using an inductively coupled plasma atomic emission spectrometer (ICP-AES).

Specifically, when the metal includes Mg, the metal may be included in the mixture in a content of 5 wt% to 15 wt%, more specifically 8 wt% to 13 wt% with respect to the total sum of weights of the silicon-based oxide included in the first vapor and the metal included in the second vapor. When the content is within the above range, the effect of improving capacity characteristics and improving initial efficiency of the prepared composite negative electrode active material may be implemented at an excellent level. Meanwhile, when the metal includes Li, the metal may be included in the mixture in a content of 3 wt% to 12 wt%, more specifically 4 wt% to 8 wt% with respect to the total sum of weights of the silicon-based oxide included in the first vapor and the metal included in the second vapor, and the effect of improving capacity characteristics and improving initial efficiency of the prepared composite negative electrode active material may be implemented at an excellent level.

The temperature during the second heat treatment may be appropriately selected in consideration of the sublimation temperature of the used metal, and may be, for example, 500°C to 1,000°C. Specifically, when the metal includes Mg, the temperature during the second heat treatment may be 750°C to 1000°C, and when the metal includes Li, the temperature during the second heat treatment may be 500°C to 750°C.

The second heat treatment may be performed in a vacuum atmosphere or a reduced pressure atmosphere of -50 torr to -200 torr.

Meanwhile, as used herein, the terms "first heat treatment" and "second heat treatment" are intended to specify that the heat treatment processes are performed independently, and are not intended to limit the sequence of the heat treatment processes.

The method for preparing a composite negative electrode active material of the present invention includes mixing the first vapor and the second vapor and subjecting the resulting mixture to a gas phase reaction. Specifically, the first vapor and the second vapor may be mixed and subjected to a gas phase reaction in one reactor.

The gas phase reaction may be performed for 3 hours to 12 hours, specifically 5 hours to 10 hours, in order to sufficiently react the first vapor and the second vapor.

The method for preparing a composite negative electrode active material of the present invention includes obtaining a silicon-based oxide-metal composite by cooling after the gas phase reaction. After the first vapor and the second vapor are reacted, they may be cooled to precipitate a silicon-based oxide-metal composite.

The cooling temperature may be 750°C to 1,100°C, specifically 800°C to 950°C, and when the cooling temperature is within the above range, the aggregates in the composite negative electrode active material may be formed to be small and uniform by preventing cooling or precipitation from occurring at an excessively high rate.

The cooling may be performed for 3 to 12 hours, specifically 5 to 10 hours, in order to perform a sufficient reaction.

According to the method for preparing a composite negative electrode active material of the present invention, the difference between the temperature during the first heat treatment and the temperature during the cooling is 400°C to 550°C.

When the difference between the heat treatment temperature and the cooling temperature is adjusted within the above-described range, the cooling rate of the silicon-based oxide-metal composite is adjusted to a desired level, so it is possible to prevent a problem in that excessive cooling rate causes the size of the aggregates in the composite negative electrode active material to become excessively large or inconsistent. Therefore, according to the above-described method for preparing a composite negative electrode active material, it is possible to minimize a problem of deterioration in service life performance brought about to the composite negative electrode active material by the volume expansion and contraction of silicon.

When the difference between the heating temperature and the cooling temperature exceeds 550°C, it is difficult to secure the uniformity of aggregate diameters while the silicon-based oxide-metal composite is rapidly cooled, and there is a concern in that the size of the aggregates becomes excessively large, so it is difficult to control the volume expansion of silicon. Further, when the difference between the heating temperature and the cooling temperature is less than 400°C, there is a concern in that aggregates are excessively grown due to excessively slow cooling. Therefore, the difference between the heating temperature and the cooling temperature needs to be adjusted to the above temperature range in order to reduce the diameter or size of the aggregates and secure uniformity.

Specifically, the difference between the heating temperature and the cooling temperature may be 420°C to 520°C, and in this case, the diameter or size of the aggregates may be adjusted to be uniform and small, so it is possible to minimize a problem of deterioration in service life performance brought about to the composite negative electrode active material by the volume expansion and contraction of silicon.

The method for preparing a composite negative electrode active material of the present invention further includes pulverizing the silicon-based oxide-metal composite.

The average particle diameter ($D_{50}$) of the pulverized silicon-based oxide-metal composite may be preferably 1 $\mu$m to 15 $\mu$m, and more preferably 2 $\mu$m to 8 $\mu$m in terms of the fact that the composite negative electrode active material during charging and discharging is ensured to be structurally stable, a problem in that the volume expansion/contraction level is also increased as the particle diameter is excessively increased is prevented, and a problem in that the initial efficiency is reduced due to the excessively small particle diameter is prevented.

The method for preparing a composite negative electrode active material of the present invention may further include forming a carbon coating layer on the surface of the pulverized silicon-based oxide-metal composite. The carbon coating layer may function as a protective layer capable of appropriately controlling volume expansion according to the charging and discharging of the composite negative electrode active material and preventing side reactions with an electrolytic solution. The composite negative electrode active material of the present invention may include the above-described silicon-based oxide-metal composite or a silicon-based oxide-metal composite on which a carbon coating layer is formed.

The forming of the carbon coating layer may be performed by a chemical vapor deposition (CVD) method, and specifically, may be performed by a chemical vapor deposition (CVD) method using at least one hydrocarbon gas selected from the group consisting of methane, ethane and acetylene. By the method, a carbon coating layer may be formed on the surface of the pulverized silicon-based oxide-metal composite at a uniform level, so that the volume expansion of the composite negative electrode active material may be smoothly controlled and side reactions caused by an electrolytic solution may be prevented.

The forming of the carbon coating layer may be performed at 800°C to 1,300°C, preferably 900°C to 1,000°C.

Other description on the carbon coating layers has been described above.

**<Negative electrode>**

Further, the present invention provides a negative electrode including the above-described negative electrode active material.

Specifically, the negative electrode of the present invention includes: a negative electrode current collector; and a negative electrode active material layer disposed on at least one surface of the negative electrode current collector, in which the negative electrode active material layer includes the above-described composite negative electrode active material.

The negative electrode current collector is not particularly limited as long as it has high conductivity without causing a chemical change in the battery. Specifically, the negative electrode current collector may include at least one selected from the group consisting of copper, stainless steel, aluminum, nickel, titanium, sintered carbon, and an aluminum-cadmium alloy, and specifically, may include copper.

The negative electrode current collector may have a thickness of typically 3 $\mu$m to 500 $\mu$m.

The negative electrode current collector may also strengthen the binding force of the negative electrode active material by forming fine irregularities on the surface thereof. For example, the negative electrode current collector may be used in various forms such as a film, a sheet, a foil, a net, a porous body, a foam, and a non-woven fabric body.

The negative electrode active material layer is located on at least one surface of the negative electrode current collector. Specifically, the negative electrode active material layer may be located on one surface or both surfaces of the negative electrode current collector.

The negative electrode active material layer includes the above-described composite negative electrode active material. The composite negative electrode active material may be included in the negative electrode active material layer to exhibit excellent capacity characteristics and service life characteristics. The description on the composite negative electrode active material has been described above.

The negative electrode active material layer may further include a carbon-based active material in addition to the above-described composite negative electrode active material, and accordingly, the overall degree of volume expansion of the negative electrode active material layer may be lowered by the carbon-based active material having a low degree of volume expansion according to charging and discharging.

The carbon-based active material may include at least one selected from the group consisting of graphite, artificial graphite, natural graphite, hard carbon, soft carbon, carbon black, graphene and fibrous carbon, and preferably, may include at least one selected from the group consisting of artificial graphite and natural graphite.

The average particle diameter ($D_{50}$) of the carbon-based active material may range from 5 $\mu$m to 35 $\mu$m, preferably from 10 $\mu$m to 20 $\mu$m, in order to secure structural stability during charging and discharging and reduce side reactions with an electrolytic solution.

Specifically, since the negative electrode active material layer simultaneously improves capacity characteristics and cycle characteristics, it is preferred to use both the composite negative electrode active material and the carbon-based active material, and specifically, the negative electrode active material layer may include the composite negative electrode active material and the carbon-based active material at a weight ratio of 1:99 to 50:50, preferably 3:97 to 40:60.

The negative electrode active material layer may include the composite negative electrode active material and the carbon-based active material in an amount of 80 wt% to 99 wt%, preferably 90 wt% to 98.5 wt%.

The negative electrode active material layer may include a binder.

The binder may include at least one selected from the group consisting of polyvinylidene fluoride (PVdF), styrene butadiene rubber(SBR), acrylonitrile butadiene rubber, acrylic rubber, butyl rubber, fluoro rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacryl amide (PAM), in terms of further improving the electrode adhesion force and imparting sufficient resistance to the volume expansion/contraction of an active material.

The binder may be included in the negative electrode active material layer in an amount of 0.5 wt% to 10 wt%, and when the content is within the above range, the content is preferred in terms of the ability to more effectively control the volume expansion of the active material.

The negative electrode active material layer may further include a conductive material. The conductive material can be used to improve the conductivity of the negative electrode, and may have conductivity without inducing a chemical change. Specifically, the conductive material may be at least one selected from the group consisting of natural graphite, artificial graphite, carbon black, acetylene black, Ketjen black, channel black, furnace black, lamp black, thermal black, a conductive fiber, carbon nanotube (CNT), fluorocarbon, an aluminum powder, a nickel powder, zinc oxide, potassium titanate, titanium oxide and a polyphenylene derivative, and may preferably include carbon black in terms of implementing high conductivity.

The conductive material may be in an amount of 0.5 wt% to 10 wt% in the negative electrode active material layer.

The negative electrode active material layer may have a thickness of 30 $\mu$m to 100 $\mu$m, preferably 40 $\mu$m to 80 $\mu$m in terms of the fact that the electrical contact with components of the negative electrode active material layer is enhanced.

The negative electrode may be manufactured by dispersing a negative electrode active material, a binder, a conductive material and the like in a solvent for forming a negative electrode slurry to prepare a negative electrode slurry, coating the negative electrode current collector with the negative electrode slurry, and then drying and rolling the coated negative electrode current collector.

The solvent for forming a negative electrode slurry may include at least one selected from the group consisting of distilled water, ethanol, methanol, and isopropyl alcohol, specifically distilled water in terms of facilitating the dispersion of the components.

### <Secondary battery>

The present invention provides a secondary battery including the above-described negative electrode, specifically, a lithium secondary battery.

Specifically, the secondary battery according to the present invention includes: the above-described negative electrode; a positive electrode; a separator interposed between the negative electrode and the positive electrode; and an electrolyte.

The positive electrode may face the negative electrode.

The positive electrode may include a positive electrode current collector; and a positive electrode active material layer located on at least one surface of the positive electrode current collector.

The positive electrode current collector is not particularly limited as long as it has high conductivity without causing a chemical change in the battery. Specifically, the positive electrode current collector may include at least one selected from the group consisting of copper, stainless steel, aluminum, nickel, titanium, sintered carbon, and an aluminum-cadmium alloy, and specifically, may include aluminum.

The positive electrode current collector may have a thickness of typically 3 to 500 $\mu$m.

The positive electrode current collector may also strengthen the binding force of the positive electrode active material by forming fine irregularities on the surface thereof. For example, the positive electrode current collector may be used in various forms such as a film, a sheet, a foil, a net, a porous body, a foam, and a non-woven fabric body.

The positive electrode active material layer may include a positive electrode active material.

The positive electrode active material is a compound capable of reversible intercalation and deintercalation of lithium, and specifically, may include a lithium transition metal composite oxide including at least one transition metal consisting of nickel, cobalt, manganese and aluminum, and lithium, preferably a lithium transition metal composite oxide including a transition metal including nickel, cobalt and manganese, and lithium.

More specifically, examples of the lithium transition metal composite oxide include a lithium-manganese-based oxide (for example, $LiMnO_2$, $LiMn_2O_4$, and the like), a lithium-cobalt-based oxide (for example, $LiCoO_2$, and the like), a lithium-nickel-based oxide (for example, $LiNiO_2$, and the like), a lithium-nickel-manganese-based oxide (for example, $LiNi_{1-Y}Mn_YO_2$ (here, $0<Y<1$), $LiMn_{2-z}Ni_zO_4$ (here, $0<Z<2$), and the like), a lithium-nickel-cobalt-based oxide (for example, $LiNi_{1-Y1}Co_{Y1}O_2$ (here, $0<Y1<1$) and the like), a lithium-manganese-cobalt-based oxide (for example, $LiCo_{1-Y2}Mn_{Y2}O_2$ (here, $0<Y2<1$), $LiMn_{2-z1}Co_{z1}O_4$ (here, $0<Z1<2$), and the like), a lithium-nickel-manganese-cobalt-based oxide (for example, $Li(Ni_pCo_qMn_{r1})O_2$ (here, $0<p<1$, $0<q<1$, $0<r1<1$, $p+q+r1=1$) or $Li(Ni_{p1}Co_{q1}Mn_{r2})O_4$ (here, $0<p1<2$, $0<q1<2$, $0<r2<2$, $p1+q1+r2=2$), and the like), or a lithium-nickel-cobalt-transition metal (M) oxide (for example, $Li(Ni_{p2-}Co_{q1}Mn_{r3}M_{s2})O_2$ (here, M is selected from the group consisting of Al, Fe, V, Cr, Ti, Ta, Mg, and Mo, p2, q2, r3, and s2 are each an atomic fraction of independent elements, and $0<p2<1$, $0<q2<1$, $0<r3<1$, $0<s2<1$, and $p2+q2+r3+s2=1$), and the like), and the like, and among them, any one or two or more compounds may be included. Among them, in view of enhancing the capacity characteristics and stability of a battery, the lithium transition metal composite oxide may be $LiCoO_2$, $LiMnO_2$, $LiNiO_2$, a lithium nickel-manganese-cobalt oxide (for example, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, or the like), a lithium nickel cobalt aluminum oxide (for example, $Li(Ni_{0.8}Co_{0.15}Al_{0.05})O_2$, and the like), and the like, and in consideration of remarkable improvement effects caused by controlling the type and content ratio of constituent elements forming a lithium transition metal composite oxide, the lithium transition metal composite oxide may be $Li(Ni_{0.6}Mn_{0.2}CO_{0.2})O_2$, $Li(Ni_{0.5}Mn_{0.3}Co_{0.2})O_2$, $Li(Ni_{0.7}Mn_{0.15}Co_{0.15})O_2$, $Li(Ni_{0.8}Mn_{0.1}Co_{0.1})O_2$, and the like, and among them, any one or a mixture of two or more may be used.

The positive electrode active material may be included in an amount of 80 wt% to 99 wt%, preferably 92 wt% to 98.5 wt% in a positive electrode active material layer in consideration of exhibiting a sufficient capacity of the positive electrode active material, and the like.

The positive electrode active material layer may further include a binder and/or a conductive material together with the above-described positive electrode active material.

The binder is a component which assists in the cohesion of an active material, a conductive material, and the like and the cohesion of a current collector, and specifically, may include at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, and fluorine rubber, preferably polyvinylidene fluoride.

The binder may be included in an amount of 1 wt% to 20 wt%, preferably 1.2 wt% to 10 wt% in the positive electrode active material layer, in terms of sufficiently securing a cohesive force between components such as a positive electrode active material.

The conductive material can be used to assist and improve the conductivity of the secondary battery, and is not particularly limited as long as the conductive material has conductivity without causing a chemical change. Specifically, the conductive material may include at least one selected from the group consisting of graphite such as natural graphite or artificial graphite; carbon black such as carbon black, acetylene black, Ketjen black, channel black, furnace black, lamp black, and thermal black; conductive fiber such as carbon fiber and metallic fiber; conductive tubes such as carbon nanotubes; fluorocarbon; metallic powder such as aluminum, and nickel powder; conductive whiskers such as zinc oxide and potassium titanate; conductive metal oxide such as titanium oxide; and polyphenylene derivatives, and preferably, the conductive material may include carbon black in terms of the fact of improving conductivity.

The conductive material may be included in an amount of 1 wt% to 20 wt%, preferably 1.2 wt% to 10 wt% in the positive electrode active material layer, in terms of sufficiently securing the electric conductivity.

The positive electrode active material layer may have a thickness of 30 μm to 400 μm, preferably 50 μm to 110 μm.

The positive electrode may be manufactured by coating the positive electrode current collector with a positive electrode slurry including a positive electrode active material and selectively a binder, a conductive material and a solvent for forming a positive electrode slurry, and then drying and rolling the coated positive electrode current collector.

The solvent for forming a positive electrode slurry may include an organic solvent such as N-methyl-2-pyrrolidone (NMP), and may be used in an amount to obtain a preferred viscosity when including the positive electrode active material, and selectively, a binder, a conductive material, and the like. For example, the solvent for forming a positive electrode slurry may be included in the positive electrode slurry, such that the concentration of a solid including a positive electrode active material and selectively a binder and a conductive material is 50 wt% to 95wt%, preferably 70 wt% to 90 wt%.

The separator separates the negative electrode and the positive electrode and provides a passage for movement of lithium ions, and can be used without particular limitation as long as the separator is typically used as a separator in a lithium secondary battery, and in particular, it is preferred that the separator has low resistance to the ionic movement of an electrolyte and has an excellent electrolytic solution impregnation ability. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Further, examples of the electrolyte used in the present invention include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a secondary battery, but are not limited thereto.

Specifically, the electrolyte may include an organic solvent and a lithium salt.

The organic solvent is not particularly limited as long as the organic solvent can act as a medium through which ions involved in the electrochemical reaction of the battery can move. Specifically, as the organic solvent, it is possible to use an ester-based solvent such as methyl acetate, ethyl acetate, gamma-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethyl methyl carbonate (EMC), ethylene carbonate (EC), and propylene carbonate (PC); an alcohol-based solvent such as ethyl alcohol and isopropyl alcohol; nitriles such as R-CN (R is a C2 to C20 linear, branched or cyclic structured hydrocarbon group, and may include a double bond aromatic ring or an ether bond); amides such as dimethylformamide; dioxolanes such as 1,3-dioxolane; or sulfolanes, and the like. Among them, a carbonate-based solvent is preferred, and a mixture of a cyclic carbonate having high ionic conductivity and a high dielectric constant (for example, ethylene carbonate, propylene carbonate, or the like) and a linear carbonate-based compound having low viscosity (for example, ethyl methyl carbonate, dimethyl carbonate, diethyl carbonate, or the like), said mixture being capable of enhancing the charging and discharging performance of the battery, is more preferred. In this case, the performance of the electrolytic solution may be excellent when a cyclic carbonate and a chain carbonate are mixed and used at a volume ratio of about 1:1 to about 1:9.

The lithium salt is not particularly limited as long as the lithium salt is a compound capable of providing lithium ions used in a lithium secondary battery. Specifically, as the lithium salt, it is possible to use $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, and the like. It is desirable to use the lithium salt within a concentration range of 0.1 M to 2.0 M. When the concentration of the lithium salt is included within the above range, the electrolyte has appropriate conductivity and viscosity, so that excellent electrolyte performance may be exhibited, and lithium ions may move effectively.

The secondary battery may be manufactured by interposing a separator between the above-described negative electrode and positive electrode, and then injecting an electrolytic solution (electrolyte) thereinto by a typical method for preparing a secondary battery.

The secondary battery according to the present invention is useful for the fields of portable devices such as mobile phones, notebook-sized computers, and digital cameras and electric vehicles such as hybrid electric vehicles (HEVs), and may be preferably used as particularly, a constituent battery of a medium-sized and large-sized battery module. Therefore, the present invention also provides a medium-sized and large-sized battery module including the aforementioned secondary battery as a unit battery.

Such medium-sized and large-sized battery modules may be preferably applied to power sources which require high output and large capacity, such as electric vehicles, hybrid electric vehicles, and electric power storage devices.

[Mode for Invention]

Hereinafter, the Examples of the present invention will be described in detail such that a person skilled in the art to which the present invention pertains can easily carry out the present invention. However, the present invention can be implemented in various different forms, and is not limited to the Examples described herein.

**Examples**

**Example 1: Preparation of composite negative**

electrode active material

(1) Preparation of composite negative electrode active material

SiO as a silicon-based oxide was put into a first tray, and subjected to a first heat treatment at 1400°C in a reduced pressure atmosphere of -100 torr to generate a first vapor. Further, Mg as a metal was put into a second tray, and subjected to a second heat treatment at 900°C in a reduced pressure atmosphere of -100 torr to generate a second vapor. The first heat treatment and the second heat treatment in each tray were performed independently. The weight ratio of the SiO contained in the first tray and the metal contained in the second tray was 88:12.

The first vapor and the second vapor were mixed and subjected to a gas phase reaction in one reactor for 8 hours.

After completion of the gas phase reaction, the resulting product was cooled at 900°C to form a silicon-based oxide particle-metal composite. The cooling was performed for 8 hours.

A silicon-based oxide particle-metal composite having an average particle diameter ($D_{50}$) of 6 $\mu$m was prepared by pulverizing the silicon-based oxide particle-metal composite with a jet mill.

The pulverized silicon-based oxide particle-metal composite is subjected to a CVD treatment in the presence of a mixed gas of argon (Ar) and methane ($CH_4$) under conditions of 950°C and 4 hours to form a carbon coating layer on the surface of the silicon-based oxide particle-metal composite, and the resulting product was used as the composite negative electrode active material of Example 1. The composite negative electrode active material has an average particle diameter ($D_{50}$) of 6 $\mu$m and includes a carbon coating layer in an amount of 4 wt%.

**(2) Measurement and calculation of average value of aggregate diameters**

Step (a): the composite negative electrode active material prepared above was captured using a scanning electron microscope (device name: S-4800, manufacturer: HITACHI) at a magnification of 100,000x. FIG. 1 is a scanning electron microscope photograph of the composite negative electrode active material of Example 1.

Step (b): as illustrated in FIG. 2, two sides facing each other were selected in FIG. 1, arbitrary points are selected on the two sides, and a straight line was drawn by connecting the two selected points.

Step (c): by using a digital image analysis program (Image J), a gray profile graph of the straight line whose longitudinal axis is a gray value and whose transverse axis is the distance of the straight line was obtained by setting a scale of pixel using the scale bar on the scanning electron microscope photograph, and then performing a plot profile. In addition, an average gray value was obtained by calculating the average value of the gray values according to the distance of the straight line of the gray profile graph. As illustrated in FIG. 3, the average gray value according to the distance of the straight line was 106.

Step (d): as illustrated in FIG. 4, a reference line parallel to the transverse axis while having the average gray value obtained above was plotted on the gray profile graph of the straight line, and the number of intersections between the gray profile graph and the reference line was obtained. Next, the value calculated by the following Equation 1 was defined as an aggregate diameter.

Aggregate diameter = length of straight line / (number of intersections between reference line and gray profile + 1)                [Equation 1]

Step (e): an average value of 50 aggregate diameters obtained by performing the steps of (a) to (d) 50 times was calculated. In this case, the average value of the aggregate diameters was 39.6 nm, and the standard deviation was 4.2 nm.

**Example 2: Preparation of composite negative electrode active material**

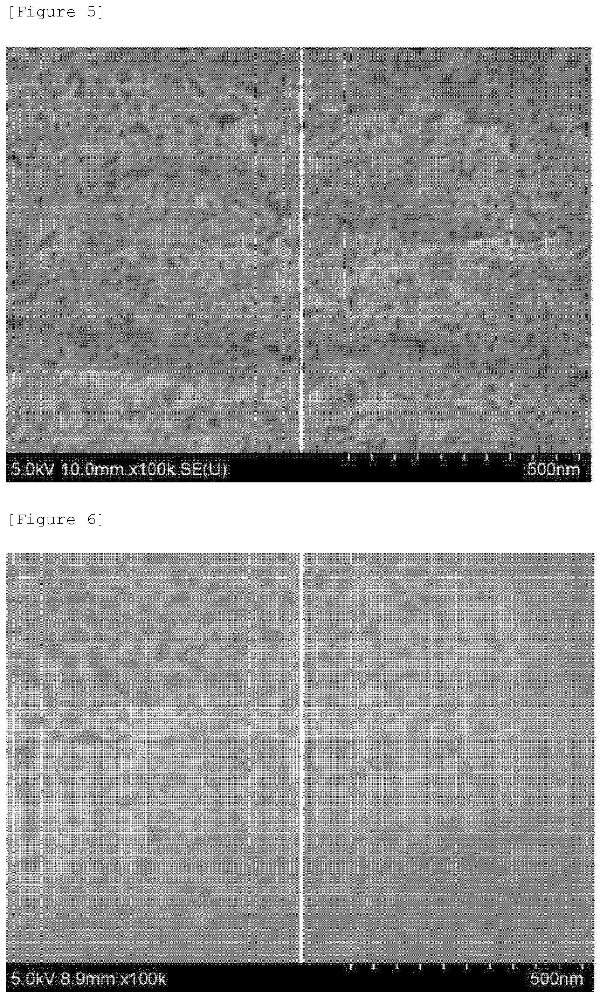

A composite negative electrode active material was prepared in the same manner as in Example 1, except that the cooling temperature was adjusted to 950°C. The composite negative electrode active material prepared above was captured using a scanning electron microscope (device name: S-4800, manufacturer: HITACHI) at a magnification of 100,000x. A scanning electron microscope photograph of the composite negative electrode active material is illustrated in FIG. 5. In the aggregate diameters measured in the same manner as in Example 1, the average value was 34.1 nm and the standard deviation was 3.8 nm.

**Example 3: Preparation of composite negative electrode active material**

A composite negative electrode active material was prepared in the same manner as in Example 1, except that the temperature during the first heat treatment was adjusted to 1,450°C and the temperature during the second heat treatment was adjusted to 920°C. The composite negative electrode active material prepared above was captured using a scanning electron microscope (device name: S-4800, manufacturer: HITACHI) at a magnification of 100,000x. A scanning electron microscope photograph of the composite negative electrode active material is illustrated in FIG. 6.

In the aggregate diameters measured in the same manner as in Example 1, the average value was 55.5 nm and the standard deviation was 4.8 nm.

**Example 4: Preparation of composite negative electrode active material**

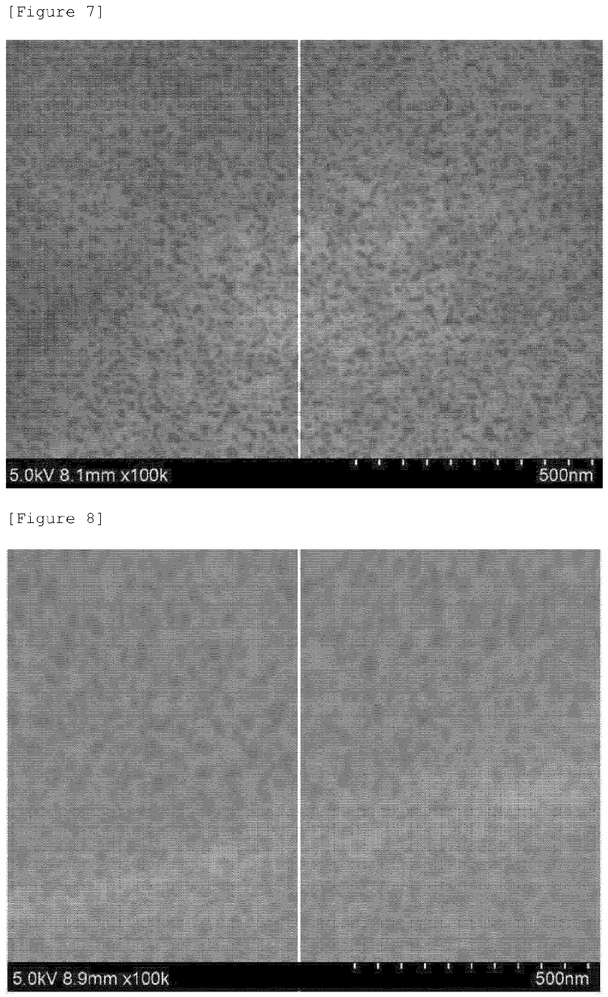

A composite negative electrode active material was prepared in the same manner as in Example 1, except that the weight ratio of SiO contained in the first tray and the metal contained in the second tray was adjusted to 95:5. The composite negative electrode active material prepared above was captured using a scanning electron microscope (device name: S-4800, manufacturer: HITACHI) at a magnification of 100,000x. A scanning electron microscope photograph of the composite negative electrode active material is illustrated in FIG. 7.

In the aggregate diameters measured in the same manner as in Example 1, the average value was 37.6 nm and the standard deviation was 5.9 nm.

**Example 5: Preparation of composite negative electrode active material**

A composite negative electrode active material was prepared in the same manner as in Example 1, except that the weight ratio of SiO contained in the first tray and the metal contained in the second tray was adjusted to 85:15. The composite negative electrode active material prepared above was captured using a scanning electron microscope (device name: S-4800, manufacturer: HITACHI) at a magnification of 100,000x. A scanning electron microscope photograph of the composite negative electrode active material is illustrated in FIG. 8.

In the aggregate diameters measured in the same manner as in Example 1, the average value was 42.7 nm and the standard deviation was 4.7 nm.

**Example 6: Preparation of composite negative electrode active material**

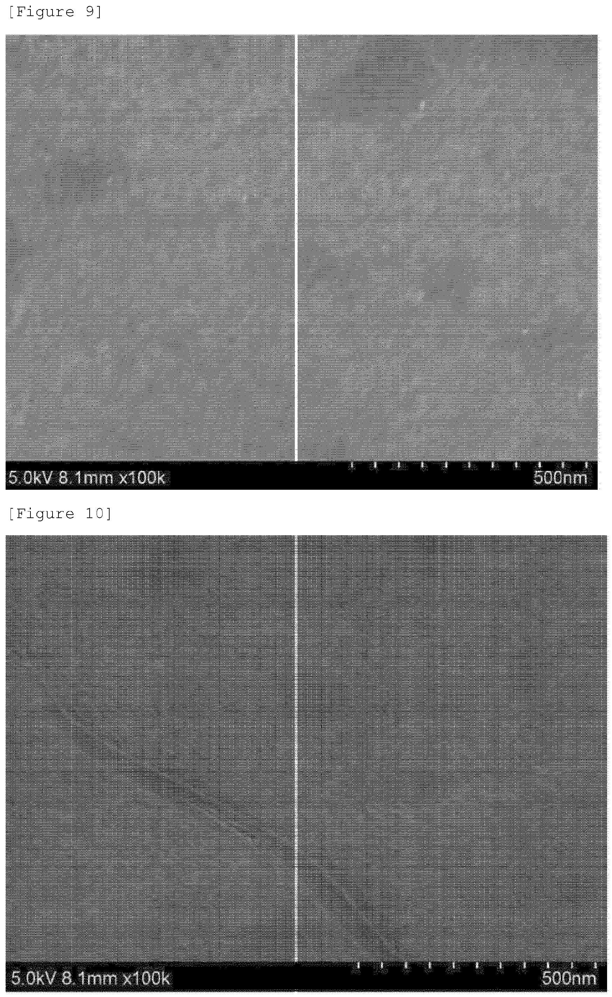

A composite negative electrode active material was prepared in the same manner as in Example 1, except that Li was used instead of Mg as the metal, the weight ratio of SiO contained in the first tray and the metal contained in the second tray was adjusted to 94:6, and the temperature during the second heat treatment was adjusted to 600°C. The composite negative electrode active material prepared above was captured using a scanning electron microscope (device name: S-4800, manufacturer: HITACHI) at a magnification of 100,000x. A scanning electron microscope photograph of the composite negative electrode active material is illustrated in FIG. 9.

In the aggregate diameters measured in the same manner as in Example 1, the average value was 27.7 nm and the standard deviation was 5.9 nm.

**Example 7: Preparation of composite negative electrode active material**

A composite negative electrode active material was prepared in the same manner as in Example 6, except that the weight ratio of SiO contained in the first tray and the metal contained in the second tray was adjusted to 97:3, and the temperature during the second heat treatment was adjusted to 550°C. The composite negative electrode active material prepared above was captured using a scanning electron microscope (device name: S-4800, manufacturer: HITACHI) at a magnification of 100,000x. A scanning electron microscope photograph of the composite negative electrode active material is illustrated in FIG. 10.

In the aggregate diameters measured in the same manner as in Example 1, the average value was 25.3 nm and the standard deviation was 2.4 nm.

**Example 8: Preparation of composite negative electrode active material**

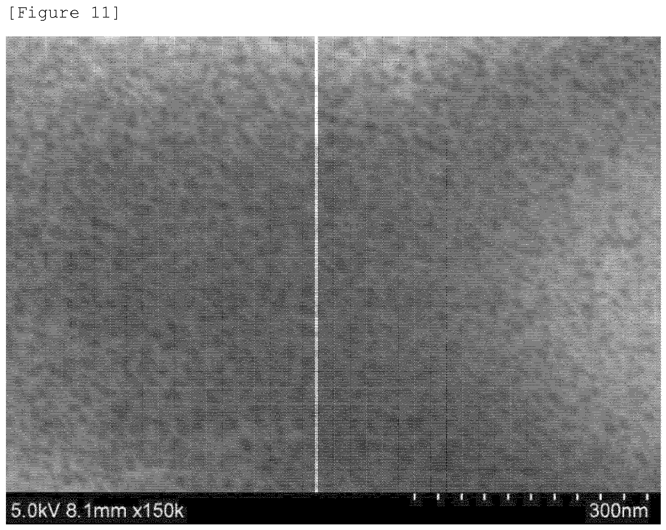

A composite negative electrode active material was prepared in the same manner as in Example 6, except that the weight ratio of SiO contained in the first tray and the metal contained in the second tray was adjusted to 90:10, and the temperature during the second heat treatment was adjusted to 700°C. The composite negative electrode active material prepared above was captured using a scanning electron microscope (device name: S-4800, manufacturer: HITACHI) at a magnification of 100,000x. A scanning electron microscope photograph of the composite negative electrode active material is illustrated in FIG. 11.

In the aggregate diameters measured in the same manner as in Example 1, the average value was 32.5 nm and the standard deviation was 5.5 nm.

**Comparative Example 1: Preparation of composite negative electrode active material**

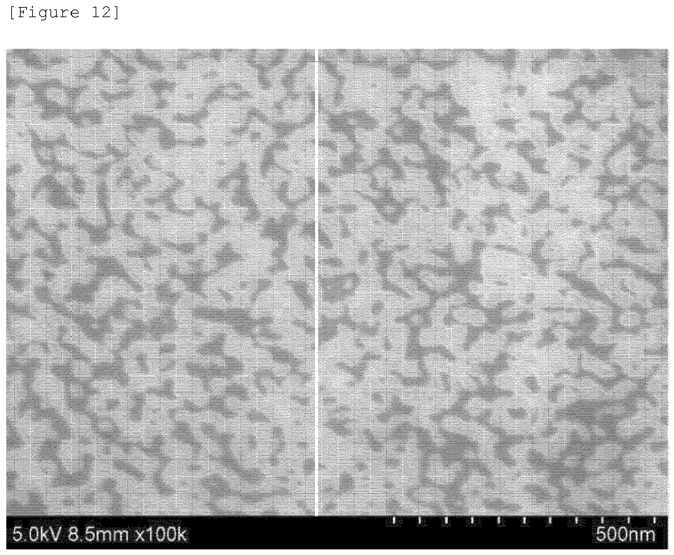

A composite negative electrode active material was prepared in the same manner as in Example 1, except that the temperature during the cooling was adjusted to 500°C. The composite negative electrode active material prepared above was captured using a scanning electron microscope (device name: S-4800, manufacturer: HITACHI) at a magnification of 100,000x. A scanning electron microscope photograph of the composite negative electrode active material is illustrated in FIG. 12.
In the aggregate diameters measured in the same manner as in Example 1, the average value was 74.2 nm and the standard deviation was 14.5 nm.

**Comparative Example 2: Preparation of composite negative electrode active material**

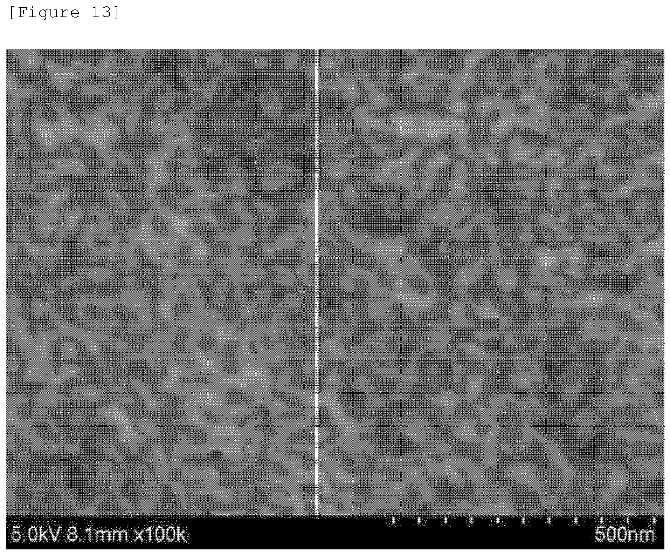

A composite negative electrode active material was prepared in the same manner as in Example 1, except that the temperature during the cooling was adjusted to 1,050°C. The composite negative electrode active material prepared above was captured using a scanning electron microscope (device name: S-4800, manufacturer: HITACHI) at a magnification of 100,000x. A scanning electron microscope photograph of the composite negative electrode active material is illustrated in FIG. 13.
In the aggregate diameters measured in the same manner as in Example 1, the average value was 78.4 nm and the standard deviation was 15.5 nm.

**Comparative Example 3: Preparation of composite negative electrode active material**

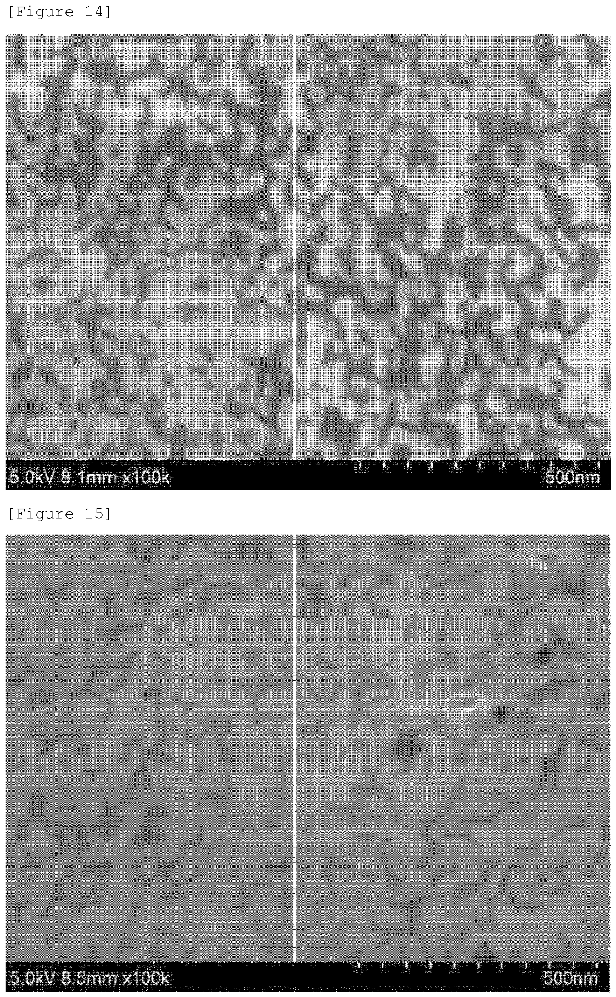

A composite negative electrode active material was prepared in the same manner as in Example 1, except that a mixture in which Si and $SiO_2$ were mixed at a molar ratio of 1:1 was put into the first tray instead of a silicon-based oxide SiO, and the weight ratio of the total sum of Si and $SiO_2$ contained in the first tray and the metal contained in the second tray was adjusted to 88:12. The composite negative electrode active material prepared above was captured using a scanning electron microscope (device name: S-4800, manufacturer: HITACHI) at a magnification of 100,000x. A scanning electron microscope photograph of the composite negative electrode active material is illustrated in FIG. 14.
In the aggregate diameters measured in the same manner as in Example 1, the average value was 83.2 nm and the standard deviation was 26.1 nm.

**Comparative Example 4: Preparation of composite negative electrode active material**

A composite negative electrode active material was prepared in the same manner as in Example 1, except that the temperature during the cooling was adjusted to 800°C. The composite negative electrode active material prepared above was captured using a scanning electron microscope (device name: S-4800, manufacturer: HITACHI) at a magnification of 100,000x. A scanning electron microscope photograph of the composite negative electrode active material is illustrated in FIG. 15.
In the aggregate diameters measured in the same manner as in Example 1, the average value was 72.2 nm and the standard deviation was 16.7 nm.

**Comparative Example 5: Preparation of composite negative electrode active material**

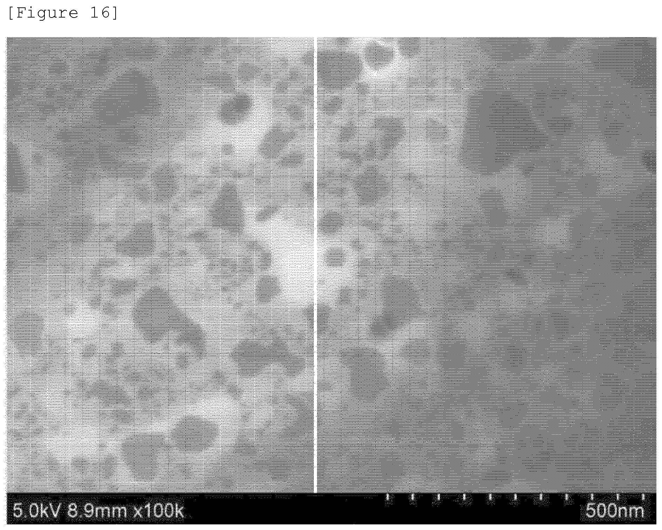

A composite negative electrode active material was prepared in the same manner as in Example 1, except that the temperature during the cooling was adjusted to 1,200°C. The composite negative electrode active material prepared above was captured using a scanning electron microscope (device name: S-4800, manufacturer: HITACHI) at a magnification of 100,000x. A scanning electron microscope photograph of the composite negative electrode active material is illustrated in FIG. 16.
In the aggregate diameters measured in the same manner as in Example 1, the average value was 143.4 nm and the standard deviation was 74.1 nm.

**Comparative Example 6: Preparation of composite negative electrode active material**

20 kg of Si ($D_{50}$ = 20 μm) and 50 kg of $SiO_2$ ($D_{50}$ = 50 nm) as silicon-based oxides were put into water, stirred for 12 hours and mixed, and then dried at 1,200°C to form a mixture. The mixture was put into a first tray and heat-treated at 1600°C in a reduced pressure atmosphere of 0.1 torr to generate a first vapor. Further, 11 kg of Mg as a metal was put into a second tray and subjected to a second heat treatment at 900°C in a reduced pressure atmosphere of 0.1 torr to generate a second vapor. The first heat treatment and the second heat treatment in each tray were performed independently.

The first vapor and the second vapor was mixed and subjected to a gas phase reaction in one reactor for 3 hours.

After the gas phase reaction was completed, the silicon-based composite oxide deposited on a substrate inside the reactor was rapidly cooled to room temperature to form a silicon-based oxide particle-metal composite.

A silicon-based oxide particle-metal composite having an average particle diameter ($D_{50}$) of 6 μm was prepared by pulverizing the silicon-based oxide particle-metal composite with a jet mill.

50 g of the silicon-based oxide particle-metal composite was put into a tube-type electric furnace, and maintained at 1000°C for 1 hour while flowing Ar and methane gas at 1 L/min each to form a carbon coating layer on the surface of the silicon-based oxide particle-metal composite, and such a resultant product was used as a composite negative electrode active material of Comparative Example 6.

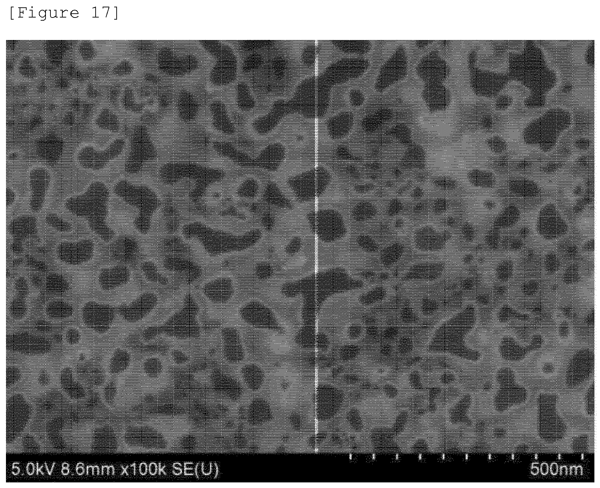

The composite negative electrode active material prepared above was captured using a scanning electron microscope (device name: S-4800, manufacturer: HITACHI) at a magnification of 100,000x. A scanning electron microscope photograph of the composite negative electrode active material is illustrated in FIG. 17.

In the aggregate diameters measured in the same manner as in Example 1, the average value was 75 nm and the standard deviation was 23.5 nm.

The details of the composite negative electrode active materials prepared in Examples 1 to 8 and Comparative Examples 1 to 6 are shown in the following Table 1.

[Table 1]

| | Average value (nm) of aggregate diameters | Standard deviation (nm) of aggregate diameters | Si crystal grain size (nm) | Metal doping | | Production method | | | | |
|---|---|---|---|---|---|---|---|---|---|---|
| | | | | Type of metal | wt% (based on total sum of weights of Sio and metal ) | Raw materials of silicon oxide particles | Temperature (°C) during first heat treatment | Temperature (°C) during second heat treatment | Temperature T(°C) during cooling | Difference (°C) between temperature during first heat treatment and temperature during cooling |
| Example 1 | 39.6 | 4.2 | 8.9 | Mg | 12 | SiO | 1,400 | 900 | 900 | 500 |
| Example 2 | 34.1 | 3.8 | 13.2 | Mg | 12 | SiO | 1,400 | 900 | 950 | 450 |
| Example 3 | 55.5 | 4.8 | 12.5 | Mg | 12 | SiO | 1,450 | 920 | 900 | 500 |
| Example 4 | 37.6 | 5.9 | 9.2 | Mg | 5 | SiO | 1,400 | 900 | 900 | 500 |
| Example 5 | 42.7 | 4.7 | 12.9 | Mg | 15 | SiO | 1,400 | 900 | 900 | 500 |
| Example 6 | 27.7 | 5.9 | 5 | Li | 6 | SiO | 1,400 | 600 | 900 | 500 |
| Example 7 | 25.3 | 2.4 | 5 | Li | 3 | SiO | 1,400 | 550 | 900 | 500 |
| Example 8 | 32.5 | 5.5 | 5 | Li | 10 | SiO | 1,400 | 700 | 900 | 500 |
| Comparative Example 1 | 74.2 | 14.5 | 9.2 | Mg | 12 | SiO | 1,400 | 900 | 500 | 900 |

(continued)

| | Avera ge value (nm) of aggre gate diame ters | Standar d deviati on (nm) of aggrega te diamete rs | Si cryst al grain size (nm) | Metal doping | | Production method | | | | |
|---|---|---|---|---|---|---|---|---|---|---|
| | | | | Type of metal | wt% (base d on total sum of weigh ts of Sio and metal ) | Raw mater ials of silic on oxide parti cles | Temper ature (°C) during first heat treatm ent | Temper ature (°C) during second heat treatm ent | Tempera ture T(°C) during cooling | Differe nce (°C) between tempera ture during first heat treatme nt and tempera ture during cooling |
| Compa rative Ex- ample 2 | 78.4 | 15.5 | 13.6 | Mg | 12 | SiO | 1,400 | 900 | 1,050 | 350 |
| Comparativ e Example 3 | 83.2 | 26.1 | 16.2 | Mg | 12 | Si/Si O$_2$ | 1,400 | 900 | 900 | 500 |
| Compa rative Example 4 | 72.2 | 16.7 | 12.2 | Mg | 12 | Sio | 1,400 | 900 | 800 | 600 |
| Compa rative Example 5 | 143.4 | 74.1 | 18.2 | Mg | 12 | Sio | 1,400 | 900 | 1,200 | 200 |
| Compa rative Example 6 | 75.0 | 23.5 | 15 | Mg | 13 | Si/Si O$_2$ | 1,600 | 900 | 23 | 1,577 |

※ **Measurement of Si crystal grain size of silicon-based oxide particles**

The Si crystal grain sizes of silicon-based oxide particles were measured by performing XRD analysis using an X-ray diffraction (XRD) analyzer (trade name: D4-endavor, manufacturer: Bruker) and measuring the (220) plane peak of Si, followed by Scherrer Equation. Specifically, the XRD analysis was performed under the following conditions.

<XRD analysis conditions>

1) Light source type and wavelength: an X-ray wavelength generated by CuK$\alpha$ was used, and the wavelength ($\lambda$) of the light source was 0.15406 nm.

2) Sample preparation method: 0.3 g of silicon-based oxide particles were put into a cylindrical holder with a diameter of 2.5 cm and a height of 2.5 mm, and planarization work was performed using a slide glass such that the height of a sample in the holder was constant to prepare a sample for XRD analysis.

3) XRD analysis equipment setting conditions: SCAN TIME was set to 1 hour and 15 minutes, a measurement region was set to a region where $2\theta$ was 10° to 90°, and STEP TIME and STEP SIZE were set so as to scan $2\theta$ by 0.02° per second. In this case, in order to measure the (220) plane peak of Si, the peak in a region in which $2\theta$ was 45° to 50° was measured.

Thereafter, the silicon crystal grain sizes of the silicon-based oxide particles were calculated using the following Scherrer Equation.

[Scherrer Equation]

Si crystal grain size (nm) = (K × λ) / (FWHM × Cosθ)

In the equation, K is 0.89 as a Scherrer constant, λ is 0.15406 nm as a wavelength of a light source, FWHM is the full width at half maximum of the (220) plane peak of Si during XRD analysis and was calculated using the Lorentz function, and Cosθ is a cosine value of the angle θ corresponding to the (220) plane peak of Si.

## Experimental Examples

### Experimental Example 1: Evaluation of service life characteristics

#### <Preparation of negative electrode>

As a negative electrode active material, a mixture of the composite negative electrode active material prepared in Example 1 and graphite (average particle diameter ($D_{50}$): 20 $\mu$m) as the carbon-based active material at a weight ratio of 15:85 was used.

The negative electrode active material, styrene-butadiene rubber (SBR) as a binder, Super C65 as a conductive material, and carboxymethyl cellulose (CMC) as a thickener were mixed at a weight ratio of 96:2:1:1, and the resulting mixture was added to distilled water as a solvent for forming a negative electrode slurry to prepare a negative electrode slurry.

One surface of a copper current collector (thickness: 15 $\mu$m) as a negative electrode current collector was coated with the negative electrode slurry in a loading amount of 3.6 mAh/cm$^2$, and the copper current collector was roll-pressed and dried in a vacuum oven at 130°C for 10 hours to form a negative electrode active material layer (thickness: 50 $\mu$m), which was employed as a negative electrode according to Example 1 (thickness of the negative electrode: 65 $\mu$m).

Furthermore, the negative electrodes of Examples 2 to 8 and Comparative Examples 1 to 6 were manufactured in the same manner as in Example 1, except that the composite negative electrode active materials of Examples 2 to 8 and Comparative Examples 1 to 6 were used, respectively, instead of the composite negative electrode active material of Example 1.

#### <Preparation of secondary battery>

A lithium metal foil was prepared as a positive electrode.

Coin-type half cells of Examples 1 to 8 and Comparative Examples 1 to 6 were manufactured by interposing a porous polyethylene separator between the negative electrodes of Examples 1 to 8 and Comparative Examples 1 to 6 manufactured above and the positive electrode and injecting an electrolytic solution thereinto.

As the electrolyte solution, a product obtained by dissolving 0.5 wt% of vinylene carbonate (VC) in a solution of ethyl methyl carbonate (EMC) and ethylene carbonate (EC) mixed at a volume ratio of 7:3, and dissolving $LiPF_6$ at a concentration of 1M was used.

#### <Evaluation of capacity retention rate>

The cycle capacity retention rates of the secondary batteries manufactured in Examples 1 to 8 and Comparative Examples 1 to 6 were evaluated using an electrochemical charger/discharger.

The cycle capacity retention rate was performed at a temperature of 25°C, the first and second cycles were charged and discharged at 0.1 C, and the third and subsequent cycles were charged and discharged at 0.5 C (charging conditions: CC/CV, 5 mV/0.005 C cut-off, discharging conditions: CC, 1.5 V cut off).

The capacity retention rate was calculated as follows.

Capacity retention rate (%) = {(Discharge capacity in the Nth cycle)/(Discharge capacity in the 1st cycle)} X 100

(In the equation, N is an integer of 1 or higher.)

The 50th cycle capacity retention rate (%) is shown in the following Table 2.

[Table 2]

|  | 50th cycle capacity retention rate (%) |
| --- | --- |
| Example 1 | 90 |
| Example 2 | 88 |
| Example 3 | 86 |
| Example 4 | 87 |
| Example 5 | 88 |
| Example 6 | 87 |
| Example 7 | 86 |
| Example 8 | 85 |
| Comparative Example 1 | 50 |
| Comparative Example 2 | 45 |
| Comparative Example 3 | 40 |
| Comparative Example 4 | 50 |
| Comparative Example 5 | 30 |
| Comparative Example 6 | 71 |

Referring to Table 2, it can be confirmed that the composite negative electrode active materials of Examples 1 to 8 in which the average value of the aggregate diameters is adjusted to a preferred level have improved service life characteristics of the battery to an excellent level compared to the composite negative electrode active materials of Comparative Examples 1 to 6.

**Claims**

1. A composite negative electrode active material comprising:

silicon-based oxide particles; and
a metal distributed on the surface, inside, or both on the surface and inside of the silicon-based oxide particles,
wherein the composite negative electrode active material comprises one or more aggregates comprising one or more selected from silicon, oxygen and a metal therein,
the metal comprises at least one selected from the group consisting of Li, Mg, and Al, and
an average value of aggregate diameters obtained by a method comprising the following Steps (a) to (e) is 65 nm or less:

(a) obtaining a square scanning electron microscope photograph by capturing the composite negative electrode active material under a scanning electron microscope;
(b) selecting two sides different from each other in the scanning electron microscope photograph, selecting one point from each of the two selected sides, and obtaining a straight line connecting the two selected points from the two sides;
(c) obtaining a gray profile graph of the straight line whose longitudinal axis represents a gray value and whose transverse axis represents a straight line distance using a digital image analysis program, and then calculating an average gray value;
(d) obtaining the number of intersections between a reference line parallel to the transverse axis while having the average gray value and the gray profile in the gray profile graph of the straight line, and then defining a value calculated by the following Equation 1 as an aggregate diameter; and
(e) obtaining an average value of the aggregate diameters by performing Steps (a) to (d) 2 or more times;

Aggregate diameter = length of straight line / (number of intersections between reference line and gray profile + 1). [Equation 1]

2. The composite negative electrode active material of claim 1, wherein the metal is comprised in an amount of 1 wt% to 20 wt% with respect to the sum of the weights of the silicon-based oxide particles and the metal.

3. The composite negative electrode active material of claim 1, wherein the metal comprises Mg, and the metal is comprised in an amount of 5 wt% to 15 wt% with respect to the sum of the weights of the silicon-based oxide particles and the metal.

4. The composite negative electrode active material of claim 1, wherein the metal comprises Li, and the metal is comprised in an amount of 3 wt% to 12 wt% with respect to the sum of the weights of the silicon-based oxide particles and the metal.

5. The composite negative electrode active material of claim 1, wherein an average value of the aggregate diameters is 5 nm to 65 nm.

6. The composite negative electrode active material of claim 1, wherein a standard deviation of the aggregate diameters obtained by Step (e) is 10 nm or less.

7. The composite negative electrode active material of claim 1, further comprising a carbon coating layer located on the surface of the composite negative electrode active material.

8. The composite negative electrode active material of claim 1, wherein the silicon-based oxide particles comprise a compound represented by the following Chemical Formula 1:

$$[\text{Chemical Formula 1}] \qquad SiO_x \ (0 < x < 2).$$

9. A method for preparing the composite negative electrode active material of any one of claims 1 to 8, the method comprising:

generating a first vapor by subjecting a silicon-based oxide comprising a compound represented by the following Chemical Formula 2 to a first heat treatment;
generating a second vapor by subjecting a metal comprising at least one selected from the group consisting of Li, Mg, and Al to a second heat treatment;
mixing the first vapor and the second vapor and subjecting the resulting mixture to a gas phase reaction;
obtaining a silicon-based oxide-metal composite by cooling after the gas phase reaction,
wherein a difference between a temperature during the first heat treatment and a temperature during the cooling is 400°C to 550°C; and
further comprising pulverizing the silicon-based oxide-metal composite:

$$[\text{Chemical Formula 2}] \qquad SiO_a (0 < a < 2).$$

10. The method of claim 9, wherein the temperature during the first heat treatment is 1,300°C to 1,500°C.

11. The method of claim 9, wherein the temperature during the cooling is 750°C to 1,100°C.

12. A negative electrode comprising:

a negative electrode current collector; and
a negative electrode active material layer located on at least one surface of the negative electrode current collector,
wherein the negative electrode active material layer comprises the composite negative electrode active material of any one of claims 1 to 8.

13. The negative electrode of claim 12, wherein the negative electrode active material layer further comprises a carbon-based active material.

14. A secondary battery comprising:

the negative electrode of claim 12;
a positive electrode;
a separator interposed between the negative electrode and the positive electrode; and
an electrolyte.

15. The method of any one of claims 9 to 11, wherein the first heat treatment is performed in a reduced pressure atmosphere of -6.7 kPa (-50 torr) to -26.7 kPa (-200 torr), and/or wherein the second heat treatment is performed in a reduced pressure atmosphere of -6.7 kPa (-50 torr) to -26.7 kPa (-200 torr).

**Patentansprüche**

1. Negativelektrodenverbundaktivmaterial, umfassend:

   Oxidteilchen auf Siliziumbasis; und
   ein Metall, das auf der Oberfläche, im Inneren oder sowohl auf der Oberfläche als auch im Inneren der Oxidteilchen auf Siliziumbasis verteilt ist,
   wobei das Negativelektrodenverbundaktivmaterial ein oder mehrere Aggregate umfasst, umfassend ein oder mehrere, ausgewählt aus Silizium, Sauerstoff und einem Metall darin,
   wobei das Metall mindestens eines umfasst, das ausgewählt ist aus der Gruppe bestehend aus Li, Mg und Al und wobei ein Mittelwert der Aggregatdurchmesser, die erhalten werden durch ein Verfahren, umfassend die folgenden Schritte (a) bis (e), 65 nm oder weniger beträgt:

   (a) Erhalten einer quadratischen Rasterelektronenmikroskopaufnahme durch Aufnehmen des Negativelektrodenverbundaktivmaterials unter einem Rasterelektronenmikroskop;
   (b) Auswählen von zwei voneinander verschiedenen Seiten in der Rasterelektronenmikroskopaufnahme, Auswählen eines Punktes von jeder der beiden ausgewählten Seiten und Erhalten einer geraden Linie, die die beiden ausgewählten Punkte von den beiden Seiten verbindet;
   (c) Erhalten eines Grauprofil-Diagramms der geraden Linie, dessen Längsachse einen Grauwert und dessen Querachse einen geraden Linienabstand darstellt, unter Verwendung eines digitalen Bildanalyseprogramms und anschließendes Berechnen eines mittleren Grauwertes;
   (d) Erhalten der Anzahl der Schnittpunkte zwischen einer Referenzlinie, die parallel zur Querachse verläuft und den mittleren Grauwert aufweist, und dem Grauprofil im Grauprofil-Diagramm der geraden Linie, und anschließendes Definieren eines anhand der folgenden Gleichung 1 berechneten Werts als Aggregatdurchmesser; und
   (e) Erhalten eines Mittelwerts der Aggregatdurchmesser durch zweimaliges oder mehrmaliges Ausführen der Schritte (a) bis (d);

   Aggregatdurchmesser = Länge der geraden Linie / (Anzahl der Schnittpunkte zwischen Referenzlinie und Grauprofil + 1).　　　　　[Gleichung 1]

2. Negativelektrodenverbundaktivmaterial gemäß Anspruch 1, wobei das Metall in einer Menge von 1 Gew.-% bis 20 Gew.-% enthalten ist, bezogen auf die Summe der Gewichte der Oxidteilchen auf Siliziumbasis und des Metalls.

3. Negativelektrodenverbundaktivmaterial gemäß Anspruch 1,

   wobei das Metall Mg umfasst und
   wobei das Metall in einer Menge von 5 Gew.-% bis 15 Gew.-% enthalten ist, bezogen auf die Summe der Gewichte der Oxidteilchen auf Siliziumbasis und des Metalls.

4. Negativelektrodenverbundaktivmaterial gemäß Anspruch 1,

   wobei das Metall Li umfasst und
   wobei das Metall in einer Menge von 3 Gew.-% bis 12 Gew.-% enthalten ist, bezogen auf die Summe der Gewichte der Oxidteilchen auf Siliziumbasis und des Metalls.

5. Negativelektrodenverbundaktivmaterial gemäß Anspruch 1, wobei ein Mittelwert der Aggregatdurchmesser 5 nm bis 65 nm beträgt.

6. Negativelektrodenverbundaktivmaterial gemäß Anspruch 1, wobei die Standardabweichung der in Schritt (e) erhaltenen Gesamtdurchmesser 10 nm oder weniger beträgt.

7. Negativelektrodenverbundaktivmaterial gemäß Anspruch 1, ferner umfassend eine Kohlenstoffbeschichtungsschicht, die sich auf der Oberfläche des Negativelektrodenverbundaktivmaterials befindet.

8. Negativelektrodenverbundaktivmaterial gemäß Anspruch 1, wobei die Oxidteilchen auf Siliziumbasis eine Verbindung umfassen, die dargestellt ist durch die folgende chemische Formel 1:

$$[\text{Chemische Formel 1}] \qquad SiO_x \ (0 < x < 2) .$$

9. Verfahren zur Herstellung des Negativelektrodenverbundaktivmaterials gemäß mindestens einem der Ansprüche 1 bis 8, wobei das Verfahren umfasst:

Erzeugen eines ersten Dampfes durch Unterziehen eines Oxids auf Siliziumbasis, umfassend eine Verbindung, die dargestellt ist durch die folgende chemische Formel 2, einer ersten Wärmebehandlung;
Erzeugen eines zweiten Dampfes durch Unterziehen eines Metalls, umfassend mindestens eines, das ausgewählt ist aus der Gruppe bestehend aus Li, Mg und Al, einer zweiten Wärmebehandlung;
Mischen des ersten Dampfes und des zweiten Dampfes und Unterziehen der resultierenden Mischung einer Gasphasenreaktion;
Erhalten eines Oxidmetall-Verbundstoffs auf Siliziumbasis durch Abkühlen nach der Gasphasenreaktion, wobei die Differenz zwischen einer Temperatur während der ersten Wärmebehandlung und einer Temperatur während des Abkühlens 400 °C bis 550 °C beträgt; und
ferner umfassend das Pulverisieren des Oxidmetall-Verbundstoffs auf Siliziumbasis:

$$[\text{Chemische Formel 2}] \qquad SiO_a (0 < a < 2).$$

10. Verfahren gemäß Anspruch 9, wobei die Temperatur während der ersten Wärmebehandlung 1.300 °C bis 1.500 °C beträgt.

11. Verfahren gemäß Anspruch 9, wobei die Temperatur während des Abkühlens 750 °C bis 1.100 °C beträgt.

12. Negative Elektrode, umfassend:

einen Negativelektrodenstromkollektor; und
eine Negativelektrodenaktivmaterialschicht, die sich auf mindestens einer Oberfläche des Negativelektrodenstromkollektors befindet,
wobei die Negativelektrodenaktivmaterialschicht das Negativelektrodenverbundaktivmaterial gemäß mindestens einem der Ansprüche 1 bis 8 umfasst.

13. Negative Elektrode gemäß Anspruch 12, wobei die Negativelektrodenaktivmaterialschicht ferner ein Aktivmaterial auf Kohlenstoffbasis umfasst.

14. Sekundärbatterie, umfassend:

die negative Elektrode gemäß Anspruch 12;
eine Positive Elektrode;
einen zwischen der negativen Elektrode und der positiven Elektrode angeordneten Separator; und
einen Elektrolyten.

15. Verfahren gemäß mindestens einem der Ansprüche 9 bis 11, wobei die erste Wärmebehandlung in einer Unterdruckatmosphäre von -6,7 kPa (-50 Torr) bis -26,7 kPa (-200 Torr) durchgeführt wird und/oder wobei die zweite Wärmebehandlung in einer Unterdruckatmosphäre von -6,7 kPa (-50 Torr) bis -26,7 kPa (-200 Torr) durchgeführt wird.

**Revendications**

1. Matériau actif d'électrode négative composite comprenant :

   des particules d'oxyde à base de silicium ; et
   un métal réparti sur la surface, à l'intérieur, ou à la fois sur la surface et à l'intérieur des particules d'oxyde à base de silicium,
   dans lequel le matériau actif d'électrode négative composite comprend un ou plusieurs agrégats comprenant un ou plusieurs choisis parmi le silicium, l'oxygène et un métal dans ceux-ci,
   le métal comprend au moins un élément choisi dans le groupe constitué par Li, Mg et Al, et
   une valeur moyenne des diamètres d'agrégat obtenue par un procédé comprenant les étapes (a) à (e) suivantes est de 65 nm ou moins :

   (a) l'obtention d'une photographie au microscope électronique à balayage carré par capture du matériau actif d'électrode négative composite sous un microscope électronique à balayage ;
   (b) la sélection de deux côtés différents l'un de l'autre dans la photographie au microscope électronique à balayage, la sélection d'un point parmi chacun des deux côtés choisis, et l'obtention d'une ligne droite reliant les deux points sélectionnés depuis les deux côtés ;
   (c) l'obtention d'un graphique de profil en niveaux de gris de la ligne droite dont l'axe longitudinal représente une valeur de gris et dont l'axe transversal représente une distance en ligne droite à l'aide d'un programme d'analyse d'image numérique, puis le calcul d'une valeur de gris moyenne ;
   (d) l'obtention du nombre d'intersections entre une ligne de référence parallèle à l'axe transversal tout en présentant la valeur moyenne de gris et le profil en niveaux de gris dans le graphique de profil en niveaux de gris de la ligne droite, puis la définition d'une valeur calculée par l'équation 1 suivante comme diamètre d'agrégat ; et
   (e) l'obtention d'une valeur moyenne des diamètres d'agrégat par réalisation des étapes (a) à (d) deux fois ou plus ;

   Diamètre d'agrégat = longueur de la ligne droite/(nombre d'intersections entre la ligne de référence et le profil en niveaux de gris + 1).                [Equation 1]

2. Matériau actif d'électrode négative composite selon la revendication 1, dans lequel le métal est compris en une quantité de 1 % en poids à 20 % en poids par rapport à la somme des poids des particules d'oxyde à base de silicium et du métal.

3. Matériau actif d'électrode négative composite selon la revendication 1, dans lequel le métal comprend Mg, et le métal est compris en une quantité de 5 % en poids à 15 % en poids par rapport à la somme des poids des particules d'oxyde à base de silicium et du métal.

4. Matériau actif d'électrode négative composite selon la revendication 1, dans lequel le métal comprend **Li, et** le métal est compris en une quantité de 3 % en poids à 12 % en poids par rapport à la somme des poids des particules d'oxyde à base de silicium et du métal.

5. Matériau actif d'électrode négative composite selon la revendication 1, dans lequel une valeur moyenne des diamètres d'agrégat est 5 nm à 65 nm.

6. Matériau actif d'électrode négative composite selon la revendication 1, dans lequel un écart-type des diamètres d'agrégat obtenus à l'étape (e) est de 10 nm ou moins.

7. Matériau actif d'électrode négative composite selon la revendication 1, comprenant en outre une couche de revêtement en carbone située sur la surface du matériau actif d'électrode négative composite.

8. Matériau actif d'électrode négative composite selon la revendication 1, dans lequel les particules d'oxyde à base de silicium comprennent un composé représenté par la formule chimique 1 suivante :

   [Formule chimique 1]          $SiO_x$ (0 < x < 2).

9. Procédé pour préparer le matériau actif d'électrode négative composite selon l'une quelconque des revendications 1 à 8, le procédé comprenant :

la génération d'une première vapeur par soumission d'un oxyde à base de silicium comprenant un composé représenté par la formule chimique 2 suivante à un premier traitement thermique ;
la génération d'une seconde vapeur par soumission d'un métal comprenant au moins un élément choisi dans le groupe constitué par Li, Mg et Al à un second traitement thermique ;
le mélange de la première vapeur et de la seconde vapeur et la soumission du mélange résultant à une réaction en phase gazeuse ;
l'obtention d'un composite métal-oxyde à base de silicium par refroidissement après la réaction en phase gazeuse,
dans lequel une différence entre une température pendant le premier traitement thermique et une température pendant le refroidissement est de 400 °C à 550 °C ; et
comprenant en outre la pulvérisation du composite métal-oxyde à base de silicium :

[Formule chimique 2]     $SiO_a (0 < a < 2)$.

10. Procédé selon la revendication 9, dans lequel la température pendant le premier traitement thermique est de 1300 °C à 1500 °C.

11. Procédé selon la revendication 9, dans lequel la température pendant le refroidissement est de 750 °C à 1100 °C.

12. Électrode négative comprenant :

un collecteur de courant d'électrode négative ; et
une couche de matériau actif d'électrode négative située sur au moins une surface du collecteur de courant d'électrode négative,
dans laquelle la couche de matériau actif d'électrode négative comprend le matériau actif d'électrode négative composite selon l'une quelconque des revendications 1 à 8.

13. Électrode négative selon la revendication 12, dans laquelle la couche de matériau actif d'électrode négative comprend en outre un matériau actif à base de carbone.

14. Batterie secondaire comprenant :

l'électrode négative selon la revendication 12 ;
une électrode positive ;
un séparateur interposé entre l'électrode négative et l'électrode positive ; et
un électrolyte.

15. Procédé selon l'une quelconque des revendications 9 à 11, dans lequel le premier traitement thermique est effectué dans une atmosphère à pression réduite de -6,7 kPa (-50 torr) à -26,7 kPa (-200 torr), et/ou dans lequel le second traitement thermique est effectué dans une atmosphère à pression réduite de -6,7 kPa (-50 torr) à -26,7 kPa (-200 torr).

[Figure 1]

5.0kV 4.3mm x100k          500nm

[Figure 2]

5.0kV 4.3mm x100k          500nm

[Figure 3]

[Figure 4]

[Figure 5]

[Figure 6]

[Figure 7]

5.0kV 8.1mm x100k                    500nm

[Figure 8]

5.0kV 8.9mm x100k                    500nm

[Figure 9]

5.0kV 8.1mm x100k     500nm

[Figure 10]

5.0kV 8.1mm x100k     500nm

[Figure 11]

5.0kV 8.1mm x150k          300nm

[Figure 12]

[Figure 13]

5.0kV 8.1mm x100k　　500nm

[Figure 14]

5.0kV 8.1mm x100k      500nm

[Figure 15]

5.0kV 8.5mm x100k      500nm

[Figure 16]

EP 4 266 413 B1

[Figure 17]

39

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170074030